# EUROPEAN PATENT APPLICATION

(11) **EP 4 701 050 A1**
(43) Date of publication of application: **25.02.2026**
(21) Application number: 25197644.5
(22) Date of filing: 22.08.2025
(51) Int. Cl.: H02K 3/18, H02K 3/28, H02K 15/095

(54) **STATOR WINDING METHOD, STATOR MANUFACTURING METHOD, STATOR, AND ELECTRICAL ROTATING MACHINE**

(30) Priority: 23.08.2024 JP 2024143899
(71) Applicant: Odawara Engineering Co., Ltd., Ashigarakami-gun, Kanagawa 258-0003 (JP)
(72) Inventor: YOKOYAMA, Akihiko, Kanagawa, 258-0003 (JP); MIYAWAKI, Noburo, Kanagawa, 258-0003 (JP)
(74) Representative: Prüfer & Partner mbB Patentanwälte · Rechtsanwälte

(57) **Abstract**

In a case where three-phase coils (C) are wound with a conductor (43) around twelve magnetic pole teeth (T1 to T12) that are provided at equal angular intervals on an inner peripheral portion of a stator core (10) forming a three-phase, twelve-pole stator, the winding configuration is such that the windings of the respective three phases share a first common winding pattern of the conductor (43) around the magnetic pole teeth (T) but differ in their circumferential positions on the stator core (10), and each phase winding includes a first portion (110) and a second portion (120) that share a second common winding pattern of the conductor (43) around the magnetic pole teeth (T) but differ in their circumferential positions on the stator core (10) by half a circumference. The conductor (43) is wound simultaneously for all of the first and second portions **(110,** 120) of the three phases by synchronously moving six nozzles (41U to 42W) feeding the conductor (43), relative to the stator core (10).

## Description

### [Technical Field]

The present invention relates to a stator winding method of winding a stator for use in an electric motor or the like, and more particularly to a winding method of winding a three-phase, twelve-pole stator in which three-phase coils are wound, with a conductor, around twelve magnetic pole teeth arranged at equal angular intervals on an inner peripheral portion of a stator core. The present invention also relates to a method of manufacturing a three-phase, twelve-pole stator, a three-phase, twelve-pole stator, and an electrical rotating machine including such a stator.

### [Background Art]

In electrical rotating machines such as motors, it is common to wind three-phase coils on a stator and connect them in a star connection. In such a configuration, increasing the number of parallel connections of the coils for each phase generally reduces electrical resistance and improves energy efficiency. In recent years, due to growing environmental concerns, there has been an increasing demand for energy conservation, and accordingly, the parallelization of coils has been strongly required.

However, when the coils are connected in parallel, the number of lead wires for connection to the power supply and the number of neutral lines for connection to a neutral point increase with the number of parallel paths, resulting in increased manufacturing time and larger complexity in the production process. In addition, increasing the number of magnetic pole teeth to allow for more parallel connections leads to an increase in the total number of coil turns per stator, which further increases the manufacturing time.

In this regard, PTL1 discloses a winding method in which three-phase coils are wound around a stator core provided with nine magnetic pole teeth arranged at equal angular intervals on its inner peripheral portion, and in which, for each phase, three lead wires serving as power supply lines for three coils exit from the same slot, thereby improving work efficiency.

PTL2 to PTL4 disclose various winding structures used when winding three-phase coils around a stator core provided with nine or twelve magnetic pole teeth arranged at equal angular intervals on its inner peripheral portion.

### [Citation List]

### [Patent Literature]

[PTL1] Japanese Patent Publication No. 4704177
[PTL2] Japanese Patent Publication No. 7371714
[PTL3] Japanese Patent Application Laid-Open Publication No. 2024-40580
[PTL4] Japanese Patent Publication No. 7434719

### [Summary of Invention]

### [Technical Problem]

However, the winding methods and winding structures disclosed in PTL1 to PTL4 have not been sufficiently efficient for winding three-phase coils with a conductor around twelve magnetic pole teeth arranged at equal angular intervals on the inner peripheral portion of a stator core, to form a three-phase, twelve-pole stator. As a result, the manufacturing efficiency of the three-phase, twelve-pole stator and of electrical rotating machines such as motors incorporating such a stator has been also insufficient.

The present invention has been made in view of the foregoing circumstances and an object thereof is to improve manufacturing efficiency of windings in a three-phase, twelve-pole stator in which three-phase coils are wound with a conductor around twelve magnetic pole teeth provided at equal angular intervals on an inner peripheral portion of a stator core. Another object of the present invention is to improve manufacturing efficiency of three-phase, twelve-pole stators and electrical rotating machines such as motors, incorporating the stator.

### [Solution to Problem]

One stator winding method according to the present invention is intended to achieve the above-described objects, and is a stator winding method of winding three-phase windings, with a conductor, around twelve magnetic pole teeth arranged at equal angular intervals on an inner peripheral portion of a stator core configured to constitute a three-phase, twelve-pole stator. Further, the windings of the respective phases share a first common winding pattern of the conductor around the magnetic pole teeth but differ from one another in their circumferential positions on the stator core, and the winding of each phase includes a first portion and a second portion, which share a second common winding pattern of the conductor around the magnetic pole teeth but differ from each other in their circumferential positions on the stator core by half a circumference. Further, all of the first portions and the second portions of the windings of the three phases are wound simultaneously by synchronously moving, relative to the stator core, six nozzles that feed the conductor.

In such a stator winding method, it is conceivable that slots are formed between adjacent magnetic pole teeth, and that when two axial end faces of the stator core are defined as a first end face and a second end face, respectively; and the twelve magnetic pole teeth are defined as, in order toward a first circumferential direction that is one of circumferential directions of the stator core, a first tooth through a twelfth tooth, respectively, the first portion of one of the three phases is formed by following steps (a) through (f), through movement of at least one of: a first nozzle corresponding to the first portion; and the stator core, while feeding the conductor from the first nozzle:
(a) inserting the first nozzle into a first slot adjacent to the first tooth from the first end face side;
(b) then winding the conductor around the first tooth in a first direction;
(c) then drawing the first nozzle out from the first slot to the second end face side, and relatively rotating the first nozzle with respect to the stator core to a position of a second slot adjacent to the fourth tooth, thereby forming a linking portion on the second end face side;
(d) then inserting the first nozzle into the second slot from the second end face side, drawing the first nozzle out to the first end face side and pulling out the conductor by a predetermined length without passing through any step of winding the conductor around a magnetic pole tooth, and then re-inserting the first nozzle into the second slot from the first end face side, thereby forming a lead-out portion of the conductor on the first end face side;
(e) then winding the conductor around the fourth tooth in a second direction opposite to the first direction; and
(f) then drawing the first nozzle out to the first end face side of a third slot, which is adjacent to the fourth tooth and located on a side opposite to the second slot with respect to the fourth tooth.

Further, it is conceivable that the first slot is located between the first tooth and the second tooth, and the second slot is located between the fourth tooth and the third tooth.

Alternatively, it is also conceivable that the first slot is located between the first tooth and the twelfth tooth, and the second slot is located between the fourth tooth and the fifth tooth.

Further, in the above stator winding methods, it is conceivable that the windings of the three phases differ from one another in their circumferential positions by one magnetic pole tooth.

Further, one stator manufacturing method according to the present invention is a stator manufacturing method including forming a star connection in which, for each phase, four coils each wound around one magnetic pole tooth are connected in parallel, through: winding the three-phase windings around the stator core by any of the above stator winding methods including the steps (a) through (f); then connecting all end wires of the first portion and the second portion of each phase to a common neutral point; and connecting, for each phase, the lead-out portions of the first portion and the second portion to a power supply of the corresponding phase.

Alternatively, in the stator winding method described above, the first portion of one of the three phases may be formed by following steps (g) through (l) instead of the steps (a) through (f) above:
(g) inserting the first nozzle into a first slot adjacent to the first tooth from the first end face side;
(h) then winding the conductor around the first tooth in a first direction;
(i) then drawing the first nozzle out from the first slot to the second end face side, and relatively rotating the first nozzle with respect to the stator core to a position of a second slot adjacent to the fourth tooth, thereby forming a linking portion on the second end face side;
(j) then inserting the first nozzle into the second slot from the second end face side;
(k) then winding the conductor around the fourth tooth in the first direction; and
(l) then drawing the first nozzle out to the first end face side of the second slot.

In this case, it is conceivable that the windings of the three phases differ from one another in their circumferential positions by one magnetic pole tooth.

Further, it is also conceivable that the first slot is located between the first tooth and the second tooth, and the second slot is located between the fourth tooth and the third tooth.

Alternatively, it is also conceivable that the first slot is located between the first tooth and the twelfth tooth, and the second slot is located between the fourth tooth and the fifth tooth.

Further, another stator manufacturing method according to the present invention is a stator manufacturing method including forming a star connection in which, for each phase, two coils, each wound in series around two magnetic pole teeth, are connected in parallel, through: winding the three-phase windings around the stator core by any of the above stator winding methods including the steps (g) through (l); then connecting all winding-end side end wires of the first portion and the second portion of each phase to a common neutral point; and connecting, for each phase, winding-start side end wires of the first portion and the second portion to a power supply of the corresponding phase.

Alternatively, in the stator winding method described above, the first portion of one of the three phases may be formed by following steps (m) through (p) instead of the steps (a) through (f) above:
(m) inserting the first nozzle into a first slot adjacent to the second tooth from the first end face side;
(n) then winding the conductor around the second tooth in a first direction;
(o) directly thereafter, winding the conductor around the first tooth in a second direction opposite to the first direction; and
(p) then completing the winding around the first tooth at a second slot adjacent to the first slot, and drawing the first nozzle out to the first end face side of the second slot.

Further, it is also conceivable that the first slot is located between the second tooth and the third tooth, and the second slot is located between the first tooth and the second tooth.

Alternatively, it is also conceivable that the first slot is located between the second tooth and the first tooth, and the second slot is located between the first tooth and the twelfth tooth.

Further, still another stator manufacturing method according to the present invention is a stator manufacturing method including forming a star connection in which, for each phase, two coils, each wound in series around two adjacent magnetic pole teeth and having different winding directions on the respective magnetic pole teeth, are connected in parallel, through: winding the three-phase windings around the stator core by any one of the above stator winding method including the steps (m) through (p); then connecting all of winding-end side end wires of the first portion of each phase and winding-start side end wires of the second portion of each phase to a common neutral point; and connecting, for each phase, winding-start side end wire of the first portion and winding-end side end wire of the second portion to a power supply of the corresponding phase.

The present invention is not limited to the stator winding methods and the stator manufacturing methods described above, but can be implemented in any form, including: a stator as a product; a winding apparatus that performs a winding method; a system including multiple devices; a computer program for controlling a winding apparatus; a non-transitory machine-readable storage medium storing such a computer program; an armature wound by a winding apparatus; and an electrical rotating machine including such an armature.

One stator according to the present invention includes: a stator core comprising twelve magnetic pole teeth arranged at equal angular intervals on an inner peripheral portion thereof, and slots formed between adjacent magnetic pole teeth; and three-phase windings formed of a conductor and wound around the twelve magnetic pole teeth of the stator core. In this stator, the windings of the respective phases share a first common winding pattern of the conductor around the magnetic pole teeth but differ from one another in their circumferential positions on the stator core, and the winding of each phase comprises a first portion and a second portion, which share a second common winding pattern of the conductor around the magnetic pole teeth but differ from each other in their circumferential positions on the stator core by half a circumference.

### [Effect of the Invention]

According to the present invention described above, manufacturing efficiency of winding in a three-phase, twelve-pole stator in which three-phase coils are wound with a conductor around twelve magnetic pole teeth provided at equal angular intervals on an inner peripheral portion of a stator core can be improved. Further, manufacturing efficiency of three-phase, twelve-pole stators and electrical rotating machines such as motors, incorporating the stator can be improved.

### [Brief Description of Drawings]

[Fig. 1] Fig. 1 is a schematic plan view of a stator core to be wound according to an embodiment of the present invention, as viewed from the side where a linking portion is formed.
[Fig. 2] Fig. 2 is a schematic plan view similar to Fig. 1, showing a stator formed by winding windings including three-phase coils around the stator core shown in Fig. 1.
[Fig. 3] Fig. 3A and Fig. 3B are schematic views illustrating a winding structure according to the first embodiment of the present invention. Fig. 3A shows the winding structure of only the U-phase, and Fig. 3B shows the winding structure of all three phases.
[Fig. 4] Fig. 4 is a diagram for explaining a star connection structure that can be implemented using the windings shown in Fig. 3B.
[Fig. 5] Fig. 5 is a diagram for explaining a wiring operation to be performed on the windings shown in Fig. 3B to form the star connection shown in Fig. 4.

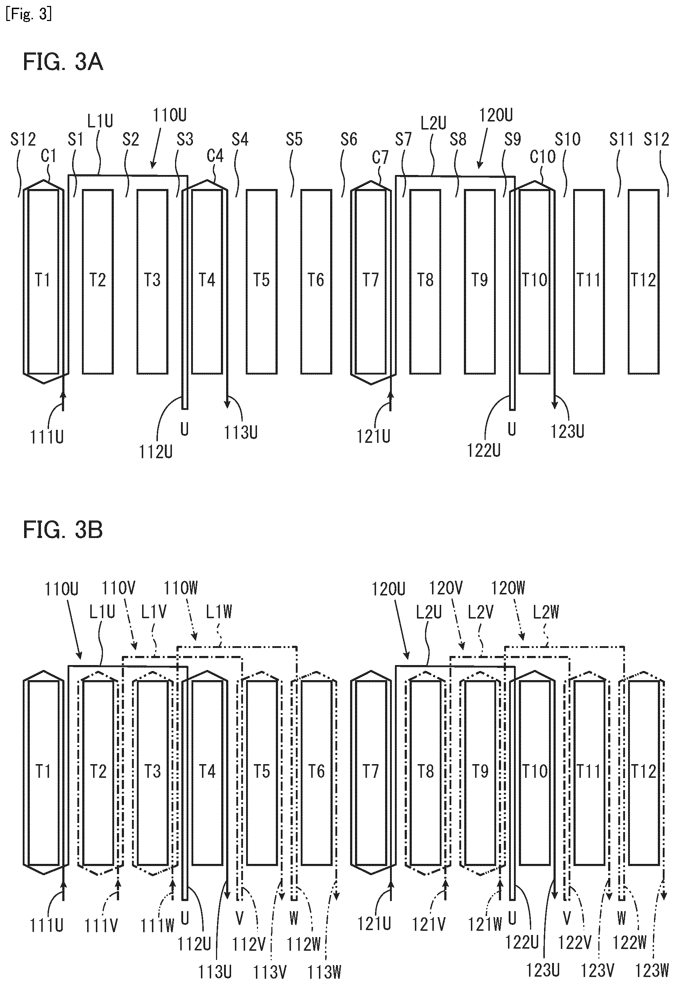

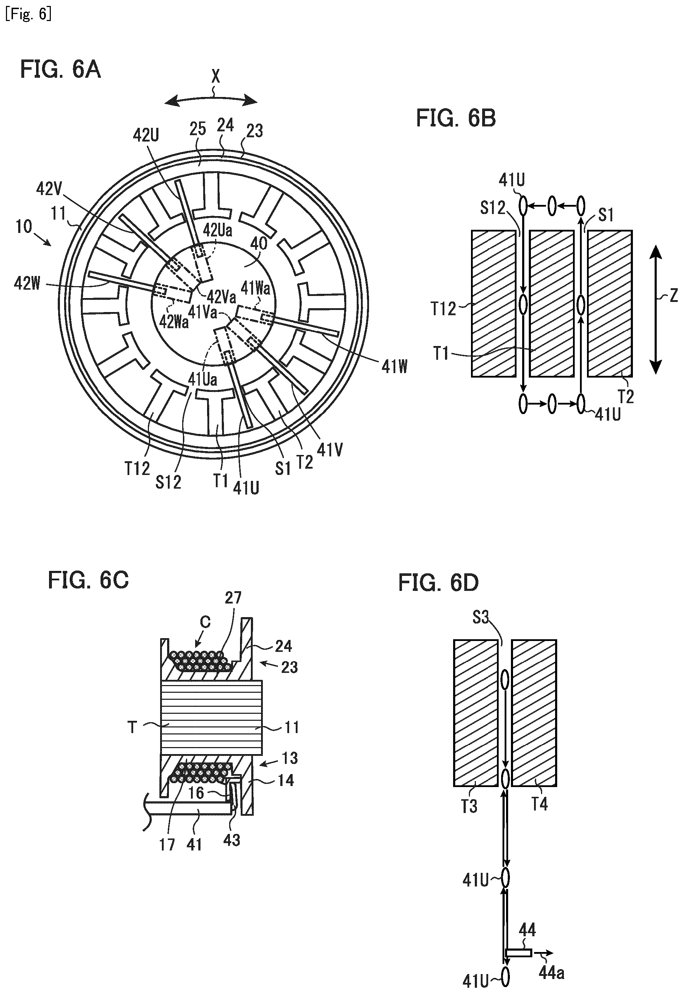

[Fig. 6] Figs. 6A to 6D are diagrams for explaining a winding apparatus for forming the windings shown in Fig. 3B and an example of a winding procedure using the winding apparatus. Fig. 6A is a diagram showing a nozzle arrangement in the winding apparatus. Fig. 6B is a diagram showing a path of relative movement between the nozzle and magnetic pole teeth when winding a wire around a magnetic pole tooth. Fig. 6C is a diagram showing a positional relationship between the nozzle and a pin during formation of a linking portion. Fig. 6D is a diagram for explaining a process of forming a lead-out portion.
[Fig. 7] Fig. 7 is a diagram showing an example of a nozzle arrangement in a winding apparatus configured to form windings of a fourth modification example of the first embodiment.
[Fig. 8] Fig. 8 is a diagram corresponding to Fig. 1, for explaining a notation method for magnetic pole teeth in a first modification example of the first embodiment.
[Fig. 9] Fig. 9A and Fig. 9B are diagrams respectively corresponding to Fig. 3A and Fig. 3B, schematically illustrating winding structures according to the first modification example of the first embodiment of the present invention.
[Fig. 10] Fig. 10A and Fig. 10B are diagrams respectively corresponding to Fig. 3A and Fig. 3B, schematically illustrating winding structures according to a second modification example of the first embodiment of the present invention.
[Fig. 11] Fig. 11 is a diagram for explaining a wiring operation to be performed on the windings shown in Fig. 10B to form the star connection illustrated in Fig. 4.
[Fig. 12] Fig. 12A and Fig. 12B are diagrams respectively corresponding to Fig. 3A and Fig. 3B, schematically illustrating winding structures according to a third modification example of the first embodiment of the present invention.
[Fig. 13] Fig. 13 is a diagram corresponding to Fig. 3B, schematically illustrating winding structures according to a fourth modification example of the first embodiment of the present invention.
[Fig. 14] Fig. 14A and Fig. 14B are diagrams respectively corresponding to Fig. 3A and Fig. 3B, schematically illustrating winding structures according to a second embodiment of the present invention.
[Fig. 15] Fig. 15 is a diagram for explaining a star connection structure that can be implemented using the windings shown in Fig. 14B.
[Fig. 16] Fig. 16 is a diagram for explaining a wiring operation to be performed on the windings shown in Fig. 14B to form the star connection shown in Fig. 15.
[Fig. 17] Fig. 17A and Fig. 17B are diagrams respectively corresponding to Fig. 3A and Fig. 3B, schematically illustrating winding structures according to a modification example of the second embodiment of the present invention.
[Fig. 18] Fig. 18 is a diagram for explaining a wiring operation to be performed on the windings shown in Fig. 17B to form the star connection shown in Fig. 15.
[Fig. 19] Fig. 19A and Fig. 19B are diagrams respectively corresponding to Fig. 3A and Fig. 3B, schematically illustrating winding structures according to a third embodiment of the present invention.
[Fig. 20] Fig. 20 is a diagram for explaining a star connection structure that can be implemented using the windings shown in Fig. 19B.
[Fig. 21] Fig. 21 is a diagram for explaining a wiring operation to be performed on the windings shown in Fig. 19B to form the star connection shown in Fig. 20.
[Fig. 22] Fig. 22A and Fig. 22B are diagrams respectively corresponding to Fig. 3A and Fig. 3B, schematically illustrating winding structures according to a modification example of the third embodiment of the present invention.
[Fig. 23] Fig. 23 is a diagram for explaining a wiring operation to be performed on the windings shown in Fig. 22B to form a star connection according to the modification example of the third embodiment.

### [Description of Embodiments]

Hereinafter embodiments of the present invention will be described with reference to the drawings.

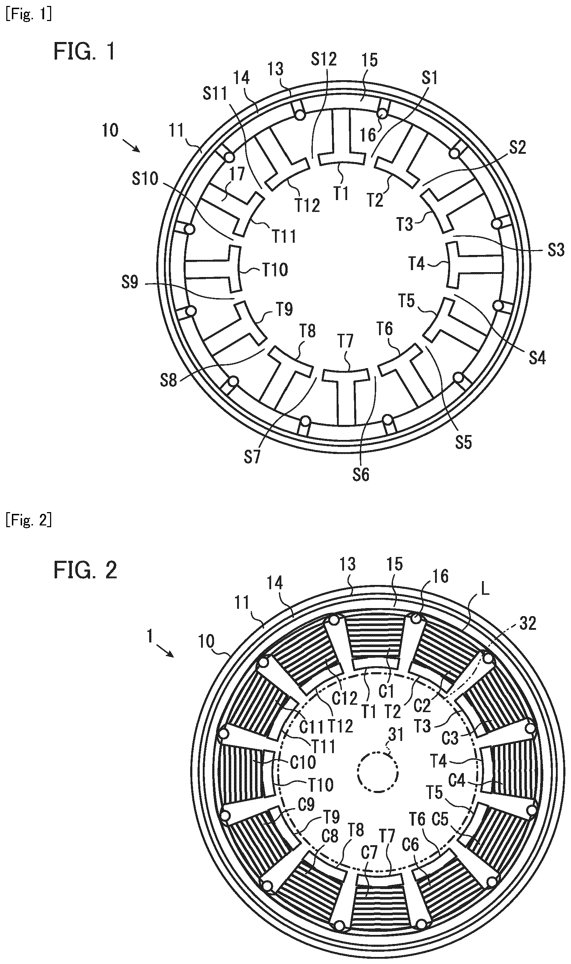

### [First Embodiment: Fig. 1 to Fig. 7]

First, a schematic configuration of a stator 1 according to a first embodiment of the present invention will be described with reference to Fig. 1 and Fig. 2.

Fig. 1 is a schematic plan view of a stator core 10, which constitutes the stator 1, as viewed from the side where a linking portion is to be formed. Fig. 2 is a schematic plan view similar to Fig. 1, showing the stator 1 formed by winding windings including three-phase coils around the stator core 10 shown in Fig. 1.

The stator core 10 has a generally hollow cylindrical shape, and in Fig. 1, an axial end face thereof (the second end face) appears.

As shown in Fig. 1, the stator core 10 includes twelve magnetic pole teeth (salient poles) T1 to T12 corresponding respectively to a first tooth to a twelfth tooth. These teeth are provided at equal angular intervals and project radially inward from an inner peripheral portion of a surrounding annular portion 11. The annular portion 11 and the magnetic pole teeth T1 to T12 are formed as a continuous, integral metal component. For convenience, the reference signs T1 to T12 are sequentially assigned clockwise to the magnetic pole teeth T, starting from the first magnetic pole tooth T1 used as a convenient reference to the twelfth magnetic pole tooth T12. The selection of which magnetic pole tooth is designated as T1 is arbitrary. When referring to a magnetic pole tooth generically, the reference sign "T" is used.

A slot S is formed between each pair of adjacent magnetic pole teeth T. Here, the slot formed between the magnetic pole tooth T1 and the magnetic pole tooth T2 is assigned the reference sign S1, and the subsequent slots are sequentially assigned the reference signs S2 to S12 in the clockwise direction. When referring to a slot generically, the reference sign "S" is used.

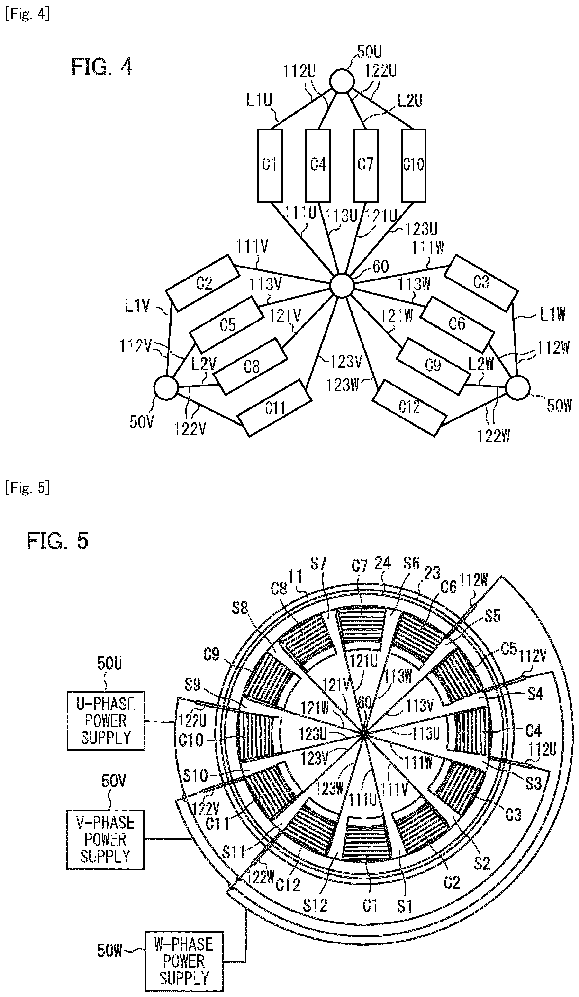

Insulating members 13 and 23 made of resin are provided on the surface appearing in Fig. 1 and the opposite surface, respectively, of the metal component including the annular portion 11 and the magnetic pole teeth T (for the opposite surface, see Fig. 5, Fig. 6A, Fig. 6C, and so on). In Fig. 1, except for the radial end portion of the annular portion 11, all visible areas are portions of the insulating member 13. Even in the areas indicated as magnetic pole teeth T, what appears in the drawing is the insulating member 13 covering the metal component constituting the magnetic pole teeth T.

The insulating member 13 includes an outer wall 14, a linking portion arrangement section 15, pins 16, and magnetic pole tooth covering portions 17 that cover the aforementioned magnetic pole teeth T.

The outer wall 14 is a wall rising in parallel with the central axis of the stator core 10 from the annular portion 11.

Twelve pins 16 are provided, each positioned substantially at the center between adjacent magnetic pole teeth T in the circumferential direction. Each pin 16 extends radially inward from the outer wall 14 by a length approximately corresponding to the width of the linking portion arrangement section 15, and then rises in parallel with the central axis.

The linking portion arrangement section 15 is a surface formed between the outer wall 14 and the pins 16, and is oriented perpendicular to the central axis.

The stator 1 according to the first embodiment of the present invention is formed, as shown in Fig. 2, by winding windings including three-phase coils around the stator core 10 shown in Fig. 1.

As shown in Fig. 2, coils C1 to C12 are wound with a conductor 43 (see Fig. 6C) around the respective magnetic pole teeth T1 to T12. A coil wound around a magnetic pole tooth TN is denoted by the reference sign CN (where N is a natural number from 1 to 12). As the conductor, a wire such as a copper wire covered with an insulating resin may be used, but the material is not limited thereto. Similar to the magnetic pole teeth T, when referring to a coil generically, the reference sign "C" is used.

The winding on the stator 1 also includes a linking portion L that connects a coil CX wound around a certain magnetic pole tooth TX with another coil CY wound around a different magnetic pole tooth TY (X and Y are different natural numbers from 1 to 12). The position of the linking portion L on the radially inner side of the stator core 10 is regulated by the pin(s) 16, and the linking portion L is arranged in the linking portion arrangement section 15 while being guided along one or more pins 16. The detailed structure and arrangement of the coils C and the linking portions L will be described later with reference to Figs. 3A and 3B.

In addition, on the rear surface (first end face) of the stator 1, which does not appear in Fig. 1 and Fig. 2, lead wires for connecting the coils C to power supplies of respective phases, and neutral lines for connecting to a neutral point, are provided. The arrangement of these lead wires and neutral lines will be described later with reference to Fig. 5 and other figures.

In the stator 1 of the first embodiment, the coils C wound around the respective magnetic pole teeth T can be connected in a four-parallel star connection structure as shown in Fig. 4. As illustrated by an imaginary line in Fig. 2, a rotor 32 provided with magnets can be disposed in the hollow portion of the stator 1 so as to be rotatable about a rotation shaft 31, thereby constituting an electrical rotating machine such as a motor. By connecting each lead wire to an output circuit instead of a power supply, the structure can also constitute an electrical rotating machine in the form of a generator.

Next, winding structure in the stator 1 will be described with reference to Fig. 3A and Fig. 3B.

Fig. 3A illustrates the winding structure of only the U-phase, and Fig. 3B illustrates the winding structure of all three phases. These drawings are schematic developed views in which twelve magnetic pole teeth T1 to T12, arranged in the circumferential direction, are shown as if viewed linearly from the center side of the stator core 10. The upper side in the figures corresponds to the second end face side, which appears in Fig. 1 and Fig. 2 and where the linking portions L are formed, while the lower side corresponds to the opposite, rear side, that is, the first end face side where lead wires and neutral lines are arranged.

Each conductor constituting the windings, such as the coils C, is illustrated as a line drawn around the magnetic pole teeth T1 to T12, with arrows indicating the winding direction. The conductors forming the U-phase winding are shown as solid lines, those of the V-phase as one-dot chain lines, and those of the W-phase as two-dot chain lines. Note that the winding direction does not necessarily correspond to the direction of current flow.

Among the wires drawn out from the slots S to the first end face side, portions denoted with the symbol "U," "V," or "W" indicate the portions of the conductor to be used as lead wires for connection to the power supplies of the corresponding phases. These portions are not necessarily the ends of the conductors. The other end portions of the wires drawn out from the slots S to the first end face side indicate the portions of the conductors to be used as neutral lines for connection to a neutral point.

On the second end face side of each magnetic pole tooth T, portions where lines are horizontally drawn represent portions of the conductors that form the linking portions L.

Lines drawn around the magnetic pole teeth T represent portions of the conductor that form coils C wound around the magnetic pole teeth T. For example, in the area around magnetic pole tooth T4 in Fig. 3A, due to limitations in the illustration, the lines may not completely encircle the magnetic pole tooth T. However, even in such cases, the depiction indicates that the coil C is wound around the magnetic pole tooth T with an appropriate number of turns.

Characteristics of the winding structure shown in Fig. 3A and Fig. 3B include the following (Feature1) and (Feature2). Further, this structure is suitable for forming a star connection in which, for each phase, four coils C, each wound around one magnetic pole tooth T, are connected in parallel.

(Feature 1): The windings of the respective three phases share a first common winding pattern of the conductor around the magnetic pole teeth T but differ from one another in their circumferential positions on the stator core 10 by one magnetic pole tooth T.

(Feature2): The winding of each phase includes a first portion and a second portion, which share a second common winding pattern of the conductor around the magnetic pole teeth T but differ from each other in their circumferential positions on the stator core 10 by half the circumference.

Specifically, the U-phase winding includes a first portion 110U and a second portion 120U.

Of these, the first portion 110U, as shown in Fig. 3A, starts from an end wire 111U at the winding start, is drawn into the slot S1 (first slot) adjacent to the magnetic pole tooth T1 from the first end face side, and is continuously wound in a counterclockwise direction (first direction) around the magnetic pole tooth T1 to form the coil C1. Although the length of the end wire 111U exposed outside the slot S1 is illustrated shorter than the height of the magnetic pole tooth T in the figures, the end wire 111U is used as a neutral line as will be described later, and is therefore actually formed to have a sufficient length for this purpose. Unless otherwise noted, the same applies to other end wires.

The first portion 110U is continuously drawn out to the second end face side from the slot S1 and led to the position of the slot S3 (second slot) adjacent to the magnetic pole tooth T4, as a linking portion L1U extending on the second end face side.

The first portion 110U is further continuously drawn into the second slot S3 from the second end face side, and then, without being wound around any magnetic pole tooth T, is drawn out to the first end face side by a predetermined length and drawn again into the slot S3 from the first end face side. The portion of the conductor extending from the slot S3 on the first end face side and re-entering the same slot forms a lead-out portion 112U on the first end face side. Although the lead-out portion 112U is illustrated with a length shorter than the height of the magnetic pole tooth T in the figures, the lead-out portion 112U is used as a lead wire as will be described later, and is therefore actually formed to have a sufficient length for this purpose. Unless otherwise noted, the same applies to other lead-out portions.

The first portion 110U is further continuously wound in a clockwise direction (second direction) around the magnetic pole tooth T4 to form the coil C4, and then continuously drawn out to the first end face side from the slot S4 (third slot), which is adjacent to the magnetic pole tooth T4 and located on the side opposite to the slot S3 with respect to the magnetic pole tooth T4, thereby forming an end wire 113U at the winding end.

The second portion 120U is located at a position rotated by half the circumference clockwise from the first portion 110U as viewed in Fig. 1, i.e., offset by six magnetic pole teeth T, and has the same winding shape as the first portion 110U.

Specifically, the second portion 120U starts from an end wire 121U, is drawn into the slot S7 (first slot) from the first end face side, and is continuously wound in a counterclockwise direction around the magnetic pole tooth T7 to form the coil C7. The second portion 120U is then continuously drawn out to the second end face side from the slot S7, and led to the position of the slot S9 (second slot), as a linking portion L2U extending on the second end face side.

The second portion 120U is further continuously drawn into the slot S9 from the second end face side, and then, is drawn out from the first end face side and drawn again into the slot S9 so as to form a lead-out portion 122U.

The second portion 120U is further continuously wound in a clockwise direction around the magnetic pole tooth T10 to form the coil C10, and then continuously drawn out to the first end face side from the slot S10 (third slot), thereby forming an end wire 123U.

As shown in Fig. 3B, the V-phase winding is located at a position obtained by rotating the U-phase winding clockwise as viewed in Fig. 1 (i.e., to the right in Fig. 3B) by one magnetic pole tooth T, and has the same winding pattern as that of the U-phase winding. Similarly, the W-phase winding is located at a position obtained by further rotating the V-phase winding by one magnetic pole tooth T, and also has the same winding pattern as that of the U-phase winding and the V-phase winding.

In Fig. 3B, among the V-phase winding and the W-phase winding, portions corresponding to the respective portions of the U-phase winding, for which reference signs are assigned, are denoted by reference signs obtained by replacing the suffix "U" in the reference signs for the U-phase winding with "V" and "W," respectively. Hereinafter, when referring generically to components of each phase which have been designated with using reference signs including the suffix "U," "V," or "W", reference signs without the suffix "U," "V," or "W" will be used.

Next, a wiring process for manufacturing a motor using the stator 1 having the windings shown in Fig. 3B will be described with reference to Fig. 4 and Fig. 5.

Fig. 4 is a diagram for explaining a star connection structure that can be implemented using the windings shown in Fig. 3B. Fig. 5 is a diagram for explaining a wiring operation to be performed on the windings shown in Fig. 3B to form the star connection shown in Fig. 4. Fig. 5 shows from which positions on the stator core 10 the lead wires and neutral lines for the star connection shown in Fig. 4 are drawn out and how they are connected. In Fig. 5, the surface of the stator core 10 opposite to the one shown in Fig. 1 and Fig. 2 is illustrated. Therefore, the vertical positions of each coil C in the drawing are inverted compared to those in Fig. 2. The insulating member 23 shown in Fig. 5 includes an outer wall 24 located at a position corresponding to the outer wall 14. A magnetic pole tooth covering portion 27 that covers the magnetic pole teeth T, similar to the magnetic pole tooth covering portion 17, is also provided (see also Fig. 6C).

In Fig. 5, the neutral lines for connection to the neutral point 60 are illustrated as extending toward the center of the stator core 10, and the lead wires for connection to the power supplies 50 of the respective phases (when referring generically to the power supplies of the three phases without distinction, the reference sign "50" is used) are illustrated as extending radially. This manner of illustration is adopted to clearly show the positions from which each wire is drawn out from the stator core 10. There is no need to route the wires in the directions shown in the figure after being drawn out. Each wire may be routed arbitrarily, as long as the connection topology is maintained, and may be bundled or fixed using connectors or holders as appropriate.

Additionally, in Fig. 5, arcuate wires are depicted between the lead wires such as the lead-out portions 112 and the power supplies 50. However, these arcuate wires are also illustrated for the purpose of clearly showing the connection topology between the lead wires and the power supplies 50, and are not essential. The lead wires may be directly connected to the power supplies 50.

When manufacturing a motor using the stator 1 shown in Fig. 3B, it is assumed that a star connection will be formed as shown in Fig. 4, in which, for each phase, four coils wound around respective magnetic pole teeth T are connected in parallel.

For the U-phase, the lead-out portion 112U is connected to the U-phase power supply 50U, and the end wires 111U and 113U are connected to the neutral point 60. This allows the coils C1 and C4 to be connected in parallel. That is, the lead-out portion 112U can be used as a lead wire for connecting the two coils C1 and C4 to a common power supply, and the end wires 111U and 113U can be used as neutral lines.

In this case, the winding direction of the coil C1, which is located upstream of the lead-out portion 112U in the winding sequence, is opposite to the connection direction as viewed from the lead-out portion 112U. On the other hand, the winding direction of the coil C4, which is located downstream of the lead-out portion 112U, coincides with the connection direction as viewed from the lead-out portion 112U. Accordingly, by winding the coils C1 and C4 in opposite directions, current can flow in the same direction (clockwise when viewed from the center of the stator core 10) through both coils during energization.

As shown in Fig. 4, the wiring between the U-phase power supply 50U and the coil C1 includes not only the lead-out portion 112U but also the linking portion L1U.

Furthermore, if the conductor is bent at the turning point of the lead-out portion 112U so that the outgoing and returning conductors are folded together in close proximity, the entire lead-out portion 112U can be easily inserted into an insulating tube from the turning point. This allows the lead wire to be insulated almost entirely up to the vicinity of the stator core 10 with simple work.

A similar relationship exists among the lead-out portion 122U, the end wires 121U and 123U, the coils C7 and C10, and the linking portion L2U.

Accordingly, by collectively connecting the lead-out portions 112U and 122U to the U-phase power supply 50U, and collectively connecting the end wires 111U, 113U, 121U, and 123U to the neutral point 60, the coils C1, C4, C7, and C10 can be connected in parallel for the U-phase.

Similarly, for the V-phase, the coils C2, C5, C8, and C11 can be connected in parallel by a corresponding connection. For the W-phase as well, the coils C3, C6, C9, and C12 can be connected in parallel by a corresponding connection.

For connection to the power supply 50, the two lead-out portions 112 and 122 for each phase may be collectively connected to the corresponding phase power supply 50. This collective connection point corresponds to a lead section for connection to the power supply 50. The two lead-out portions 112 and 122 may be connected to a common connector to form the lead section. For the neutral point, all of the end wires **111,** 113, 121, and 123 for the three phases may be collectively connected to a common neutral point 60.

As can be seen from Fig. 5, one neutral line is drawn out from each of all the slots S and arranged around the entire circumference of the stator core 10.

In contrast, the lead wires are drawn out only from three consecutive slots S (slots S3 to S5 and slots S9 to S11) on the right and left sides of the figure, respectively. Accordingly, when performing an operation to collectively handle the lead wires for each phase, it is only necessary to reach toward positions generally corresponding to the right and left sides in the figure to grasp the lead wires. This improves work efficiency, particularly in manual wiring, compared to a case in which the lead wires are evenly distributed over the entire circumference. This effect can be achieved by the above-described (Feature1).

In addition, since each lead-out portion functions as two lead wires already grouped together, four coils C can be connected in parallel to the power supply 50 simply by bundling the two lead-out portions 112 and 122 , thereby further improving work efficiency.

Furthermore, as shown in Fig. 3A and Fig. 3B, each lead-out portion 112 and 122, which serves as a lead wire, is formed first, and then the coil C is wound over it. As a result, both sides of each lead-out portion 112 and 122 are pressed by the coil C within the slot S, whereby the lead-out portion is fixed onto the stator core 10. This prevents movement of the wire near the slot outlet during the wiring process and facilitates wire handling. Thus, the stator 1 having the above-described winding structure also contributes to improved work efficiency in wiring from this perspective.

Such improvements in work efficiency contribute to enhanced manufacturing efficiency of electrical rotating machines such as motors.

Next, an embodiment of a winding method for forming windings having the above-described structure will be described with reference to Fig. 6A through Fig. 6D.

Fig. 6A is a diagram showing a nozzle arrangement in a winding apparatus for implementing the winding method. Fig. 6B is a diagram showing a path of relative movement between the nozzle and the magnetic pole teeth T when winding a wire around a magnetic pole tooth T. Fig. 6C is a diagram showing a positional relationship between the nozzle and the pin during formation of the linking portion L. Fig. 6D is a diagram for explaining a process of forming the lead-out portion.

Since the windings of the first embodiment described above includes the above-described (Feature1) and (Feature2), the overall three-phase winding includes six portions in total, each having a common winding pattern of the conductor around the magnetic pole teeth T but differing in circumferential position on the stator core 10.

Accordingly, by synchronously moving six nozzles, that feed the conductors, relative to the stator core 10, the windings of the three phases, namely, the first portion 110 and second portion 120 of each phase, can be wound simultaneously.

For this purpose, for example, as shown in Fig. 6A, it is conceivable to use a winding apparatus in which six nozzles 41U, 41V, 41W, 42U, 42V, and 42W are fixed to a common nozzle holding unit 40, and each of the nozzles 41 and 42 is configured to feed a conductor 43 of a wire. Each of the nozzles 41 and 42 includes an advancing and retracting mechanism 41Ua, 41Va, 41Wa, 42Ua, 42Va, or 42Wa housed in the nozzle holding unit 40 and is configured to advance and retract in the radial direction of the stator core 10 in synchronization with one another. Further, by rotating or translating at least one of the nozzle holding unit 40 and the stator core 10 to be wound, the nozzles 41 and 42 can be synchronously moved relative to the stator core 10 in the circumferential direction (direction X in Fig. 6A) and the axial direction (direction Z in Fig. 6B) of the stator core 10.

In the following description, the winding process will be described as being performed by moving the nozzles 41 and 42. However, substantially the same winding can be achieved by moving only the stator core 10, or by moving both the nozzles 41 and 42 and the stator core 10.

Unless otherwise specified, the terms "circumferential direction," "axial direction," and "radial direction" hereinafter refer to directions with respect to the stator core 10 to be wound.

The nozzles 41U, 41V, and 41W are used for winding the first portions 110U, 110V, and 110W of the U-phase, V-phase, and W-phase, respectively, and their circumferential positions differ from one another by one magnetic pole tooth T. This corresponds to the difference in the circumferential positions of the wirings of the respective phases.

The nozzles 42U, 42V, and 42W are similarly used for winding the second portions 120U, 120V, and 120W, respectively, and their circumferential positions differ from those of the nozzles 41U, 41V, and 41W by half a circumference. This corresponds to the difference in the circumferential positions of the first portions 110 and second portions 120 of the respective phases.

By feeding the conductor 43 from the six nozzles 41 and 42, respectively, and moving the nozzles 41 and 42 relative to the stator core 10 so as to revolve around the magnetic pole teeth T, as shown in Fig. 6B, the coils C can be wound around the magnetic pole teeth T.

Fig. 6B illustrates an example in which winding is performed on the magnetic pole tooth T1 using the nozzle 41U. In this case, assuming that the winding starts from the slot S1 side, the nozzle 41U is positioned at a radial location corresponding to the position of the turn to be formed, and then translated in the axial direction to be inserted into the slot S1. After passing through the slot S1, the nozzle 41U is rotated in the circumferential direction to the position of the slot S12 which is located on the opposite side to the slot S1 with respect to the magnetic pole tooth T1. Thereafter, the nozzle 41U is translated in the axial direction, thereby being inserted into the slot S12 and passed therethrough, and then rotated back in the circumferential direction to the position of the slot S1. Through this sequence, one turn of the winding can be formed. By repeating this sequence while appropriately adjusting the radial position of the nozzle 41U, the coil C1 having a desired number of turns can be wound around the magnetic pole tooth T1. Winding operations on other magnetic pole teeth T using the other nozzles 41 and 42 can be performed in the same manner.

Fig. 6C is a schematic diagram showing only one circumferential side of a cross section of the stator core 10 taken along a plane passing through the rotation axis. In the figure, the lower side corresponds to the linking portion forming side (second end face side).

When forming a linking portion L for connection to another magnetic pole tooth T after winding around one magnetic pole tooth T is completed, the nozzle 41 is positioned on the linking portion forming side (second end face side), and is moved to an axial position where the nozzle 41 does not interfere with the pin 16 and a radial position that allows the fed conductor 43 to be placed radially outside the pin 16, as shown in Fig. 6C. In this state, by rotating the nozzle 41 in the circumferential direction, the conductor 43 can be guided along the pin(s) 16 to form the linking portion L. Once the nozzle 41 reaches the position of the next magnetic pole tooth T to be wound, the nozzle 41 may be moved to a position suitable for winding shown in Fig. 6B. The linking portion can be formed in the same manner using the nozzle 42.

Note that insulation between different linking portions L may be enhanced, for example, by varying the axial positions of the linking portions L for each wire.

Fig. 6D illustrates a procedure for forming the lead-out portion 112U at the position of the slot S3, taking the first portion 110U of the U-phase as an example.

In this case, after the nozzle 41U is drawn out to the first end face side of the slot S3, the nozzle 41U is further moved in the axial direction by a predetermined distance (a sufficient length for use as a lead wire as described above) while feeding the conductor 43. Thereafter, the conductor 43 is held by a conductor holding unit 44 at a position where the conductor 43 is to be bent back, and the nozzle 41U is moved in the axial direction along a path reversed from the previous movement and is re-inserted into the same slot S3. In this manner, the lead-out portion 112 of the conductor 43 can be formed.

The conductor holding unit 44 may be of a type capable of gripping the conductor 43, like a clip, or may be of a type on which the conductor 43 can be hooked, like a pin or hook. The conductor holding unit 44 is not necessarily required to be movable. However, it is preferable that, after the conductor holding unit 44 holds the conductor 43, the already-drawn conductor 43 is slightly moved, as indicated by arrow 44a, to prevent interference between the nozzle 41U or the conductor 43 being fed therefrom and the already-drawn conductor 43, along the return path of the nozzle 41U. Note that the movement path of the nozzle 41U outside the slot S is not necessarily required to be linear. Further, the movement path does is not necessarily required to exactly coincide with the axial direction, either. When the movement path of the nozzle 41U is not linear, interference among the conductors 43 can be avoided by adjusting the movement path of the nozzle 41U without providing a movement mechanism to move the conductor holding unit 44.

Lead-out portions can be formed in other locations in the same manner. When winding is performed simultaneously using the six nozzles 41 and 42, the lead-out portions are also formed simultaneously at six locations. However, operations other than those of the nozzles 41 and 42 and the stator core 10, for example, the operation timing of the conductor holding unit 44, is not necessarily required to be synchronized across all six locations. The amount of movement, as indicated by arrow 44a, is not necessarily required to be the same, and the movement directions are not necessarily required to be symmetrical.

As described above, by using a winding apparatus equipped with six nozzles 41 and 42 that can be driven in synchronization, and by feeding conductors 43 which are wire materials from the tips of the nozzles 41 and 42 and combining the formation of the coils C, the linking portions L, and the lead-out portions 112 and 122 as described with reference to Fig. 6B to Fig. 6D, the windings shown in Fig. 3A and Fig. 3B can be formed through relative movement of the nozzles 41 and 42 with respect to the stator core 10 such that the winding proceeds in the order illustrated in Fig. 3A and Fig. 3B. However, the winding may also be performed in the reverse order.

With such a winding method, the winding can be completed in approximately one-sixth of the time required to wind one conductor at a time sequentially, and in approximately half the time required to wind only the three phases simultaneously, thereby significantly improving the manufacturing efficiency of the stator 1.

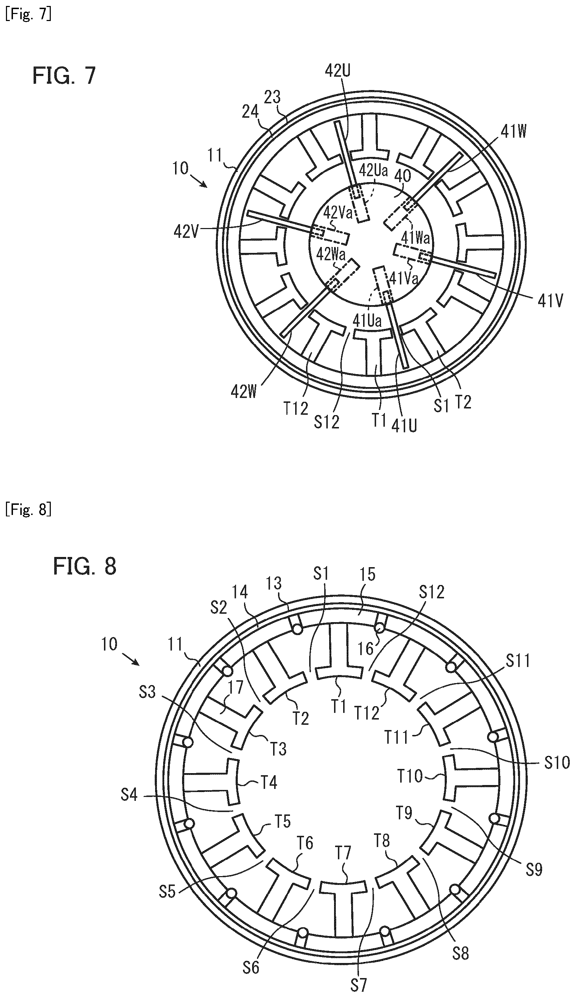

For comparison, Fig. 7 shows another example of the arrangement of the nozzles 41 and 42 in a winding apparatus. The example of Fig. 7 differs from that of Fig. 6A only in the circumferential positional relationship among the nozzles 41 and 42, and the same reference signs are used for corresponding components as those in Fig. 6A.

In the example of Fig. 7, the nozzles 41U, 41V, and 41W are arranged at circumferential positions differing from one another by two magnetic pole teeth T. The same applies to the nozzles 42U, 42V, and 42W.

The winding apparatus having the nozzle arrangement shown in Fig. 7 is suitable for forming a winding in which the windings of the three phases are respectively located at circumferential positions differing from one another by two magnetic pole teeth T, in contrast to the winding shown in Fig. 3B.

As can be seen by comparing Fig. 7 with Fig. 6A, the configuration shown in Fig. 7 provides more space for arranging the advancing and retracting mechanisms 41a and 42a than the configuration shown in Fig. 6A. This is because the advancing and retracting mechanisms 41a and 42a of adjacent nozzles 41 and 42 are located further apart in the configuration of Fig. 7 than in that of Fig. 6A.

In Fig. 7, the radial lengths of the advancing and retracting mechanisms 41a and 42a are the same as those in Fig. 6A. However, it is also possible to adopt longer advancing and retracting mechanisms and thereby increase the radial range of movement of the nozzles 41 and 42.

Despite the above circumstances, the winding configuration shown in Fig. 3B was intentionally adopted such that the windings of the three phases differ from one another in their circumferential positions by one magnetic pole tooth T, in consideration of work efficiency in connecting the lead wires. This arrangement allows the lead wires of each phase to be drawn out from relatively closer positions, thereby improving work efficiency during the wiring of the lead wires.

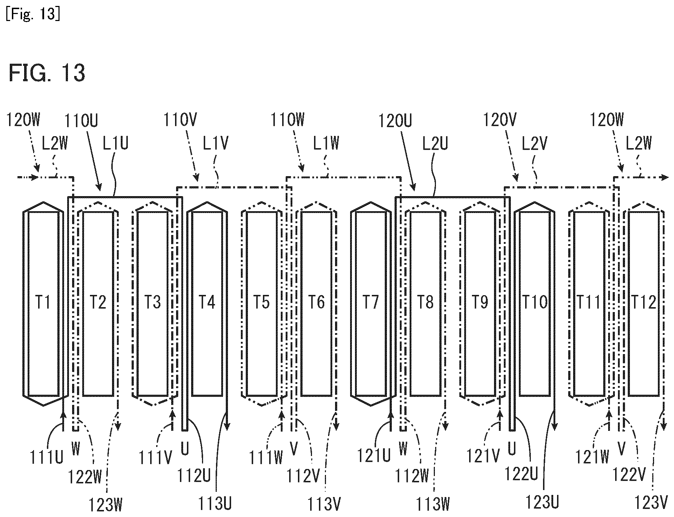

As will be described later with reference to Fig. 13, if the winding of Fig. 3B is modified so that the windings of the respective three phases differ in their circumferential positions by two magnetic pole teeth T, the lead wires of the three phases will be evenly distributed around the entire circumference of the stator core 10. In such a case, it would be necessary to reach around the entire circumference of the stator core 10 to perform wiring to the power supplies 50, which would result in lower work efficiency compared to the arrangement described with reference to Fig. 5.

### [First Modification Example of the First Embodiment: Fig. 8 to Fig. 9B]

Next, a first modification example of the above-described first embodiment will be described with reference to Fig. 8 to Fig. 9A. The first modification example differs from the first embodiment only in that the winding proceeds in the direction opposite to that shown in Fig. 3A and Fig. 3B, as viewed in the circumferential direction of the stator core 10. Components that are the same as or correspond to those in the first embodiment are denoted by the same reference signs, and explanations of common parts are omitted as appropriate. The same applies to the following modification examples as well as to the second and subsequent embodiments.

Fig. 8 is a diagram corresponding to Fig. 1, for explaining a notation method for magnetic pole teeth in the first modification example.

In this first modification example, as shown in Fig. 8, the reference signs T1 to T12 are sequentially assigned counterclockwise to the magnetic pole teeth T, starting from the first magnetic pole tooth T1 used as a convenient reference to the twelfth magnetic pole tooth T12. This differs from the example shown in Fig. 1. The structure of the stator core 10 remains the same as that in the example of Fig. 1.

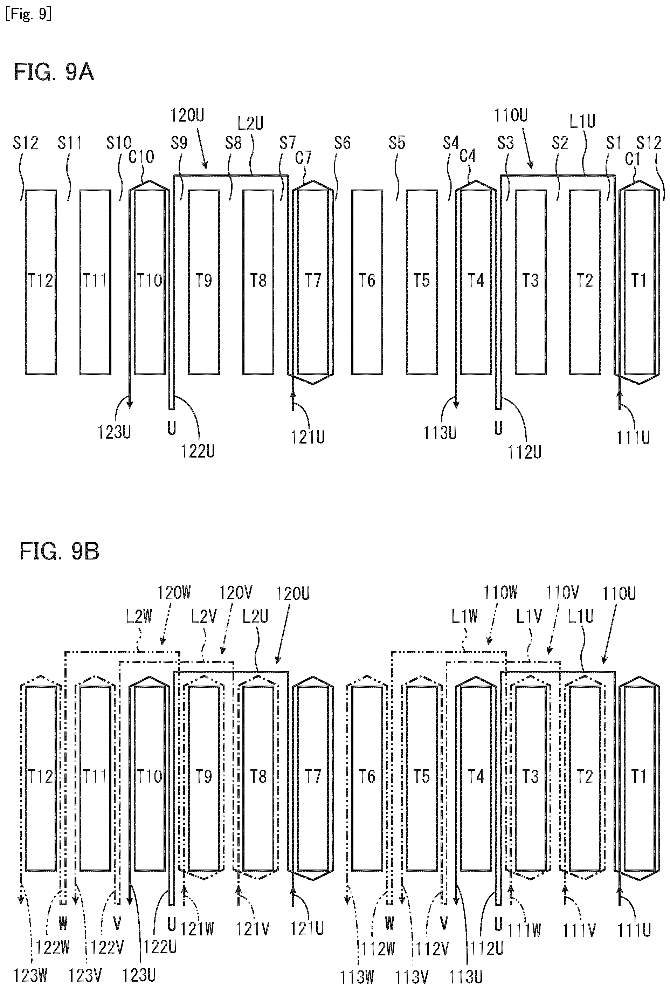

Fig. 9A and Fig. 9B respectively illustrate the winding structure of the stator 1 in the first modification example, in a manner similar to Fig. 3A and Fig. 3B.

In Fig. 9A and Fig. 9B, corresponding to the reversed order of assigning reference signs T1 to T12 to each magnetic pole tooth T compared to Fig. 3A and Fig. 3B, the magnetic pole teeth are arranged so that the numbers increase from right to left.

The slot S into which the winding is drawn, the magnetic pole tooth T around which the winding is wound, the slot S from which the winding is drawn out, and the magnetic pole teeth T between which the linking portion L is formed are the same as those in the first embodiment illustrated in Fig. 3A and Fig. 3B. However, since the order of assigning reference signs to the magnetic pole teeth T and slots S is reversed relative to Fig. 1, Fig. 9A and Fig. 9B illustrate a structure where, using the same reference signs as in Fig. 3A and Fig. 3B, the winding progression direction is reversed in the circumferential direction of the stator core 10, as compared to Fig. 3A and Fig. 3B.

However, the direction in which the conductor is wound around each magnetic pole tooth T is opposite to that in Fig. 3A and Fig. 3B. This corresponds to the reversal of the winding progression direction.

Specifically, in the first modification example, as illustrated in Fig. 9A, the first portion 110U starts from an end wire 111U at the winding start, is drawn into the slot S1 (first slot) from the first end face side, and is continuously wound in a clockwise direction (first direction) around the magnetic pole tooth T1 to form the coil C1. The first portion 110U is then continuously drawn out to the second end face side from the slot S1 and led to the position of the slot S3 (second slot) as a linking portion L1U extending on the second end face side, is further continuously drawn out to the first end face side to form a lead-out portion 112U on the first end face side of the slot S3, and is further continuously wound in a counterclockwise direction (second direction) around the magnetic pole tooth T4 to form the coil C4, and then continuously drawn out to the first end face side from the slot S4 (third slot), thereby forming an end wire 113U at the winding end.

The second portion 120U is located at a position rotated by half the circumference counterclockwise from the first portion 110U as viewed in Fig. 1, i.e., offset by six magnetic pole teeth T, and has the same winding shape as the first portion 110U. Although the rotational direction is opposite to that in Fig. 3A and Fig. 3B, since the circumferential positional difference is half a circumference, the positional relationship between the first portion 110U and the second portion 120U remains the same as in Fig. 3A and Fig. 3B.

Such winding structure also includes (Feature1) and (Feature2) described in the first embodiment and, as with the windings in the first embodiment, allows simultaneous winding of six portions in three phases. Furthermore, connection by star connection as in Fig. 4 is possible. However, the current flow direction of each coil C1 to C12 is opposite to that in the first embodiment and is counterclockwise as viewed from the center of the stator core 10. The positions from which the lead wires or lead-out portions are drawn correspond to a left-right reversal of Fig. 5. That is, the manner and circumferential range in which the lead wires or lead-out portions are drawn out from the stator core 10 are the same as in the windings of the first embodiment.

Therefore, the stator 1 of this first modification example and the winding method thereof can achieve the same effects as those of the configuration of the first embodiment described above.

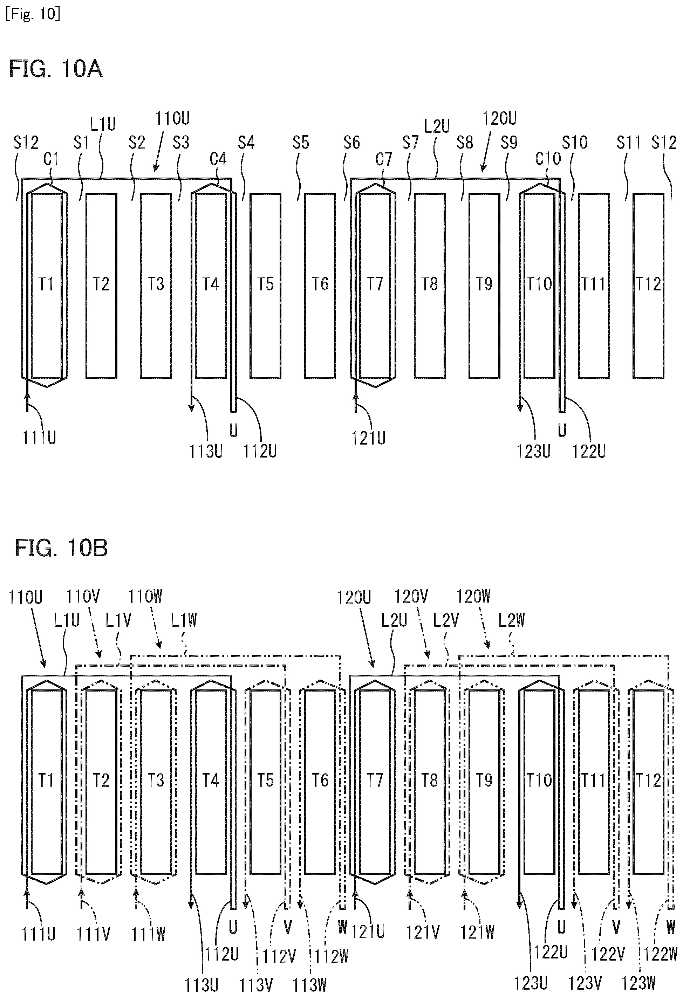

### [Second Modification Example of the First Embodiment: Fig. 10A to Fig. 11]

Next, a second modification example of the above-described first embodiment will be described with reference to Fig. 10A to Fig. 11. The second modification example differs from the first embodiment only in that the direction in which the conductor is wound around each magnetic pole tooth T is reversed, and accordingly, the positions of the slots through which the conductor passes are changed.

Fig. 10A and Fig. 10B respectively illustrate the winding structure of the stator 1 in the second modification example, in a manner similar to Fig. 3A and Fig. 3B.

In the second modification example, as illustrated in Fig. 10A, the first portion 110U of the U-phase winding starts from an end wire 111U at the winding start, is drawn into the slot S12 (first slot) adjacent to the magnetic pole tooth T1 from the first end face side, and is continuously wound in a clockwise direction (first direction) around the magnetic pole tooth T1 to form the coil C1.

The first portion 110U is then continuously drawn out to the second end face side from the slot S12 and led to the position of the slot S4 (second slot) adjacent to the magnetic pole tooth T4 on the second end face side, as a linking portion L1U.

The first portion 110U is further continuously drawn into the slot S4 from the second end face side, and without being wound around any magnetic pole tooth T, is drawn out to the first end face side by a predetermined length and drawn again into the slot S4 from the first end face side, thereby forming a lead-out portion 112U.

The first portion 110U is further continuously wound in a counterclockwise direction (second direction) around the magnetic pole tooth T4 to form the coil C4, and then continuously drawn out to the first end face side from the slot S3 (third slot), which is adjacent to the magnetic pole tooth T4 on the side opposite to the slot S4, thereby forming an end wire 113U at the winding end.

The second portion 120U is located at a position rotated by half the circumference from the first portion 110U with the same shape as the first portion 110U, as in the first embodiment.

Such winding structure also includes (Feature1) and (Feature2) described in the first embodiment and, as with the windings in the first embodiment, allows simultaneous winding of six portions in three phases. Furthermore, connection by star connection as in Fig. 4 is possible. However, the current flow direction of each coil C1 to C12 is opposite to that in the first embodiment and is counterclockwise as viewed from the center of the stator core 10.

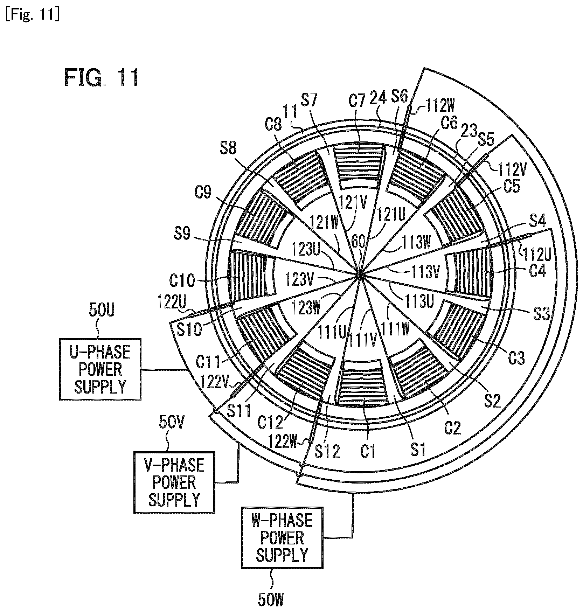

Fig. 11 illustrates the positions from which the lead wires and neutral lines are drawn and the assumed connection topology in the windings of the second modification example, in a manner similar to Fig. 5.

As can be seen from Fig. 11, the neutral lines are arranged around the entire circumference of the stator core 10, whereas the lead wires are drawn only from two locations each including three consecutive slots S (slots S4 to S6 and slots S10 to S12), as in the case of Fig. 5.

Therefore, the stator 1 of the second modification example and the winding method thereof can achieve the same effects as those of the configuration of the first embodiment described above.

As can be seen from Fig. 10A and Fig. 10B, in the windings of the second modification example, each linking portion L extends over a length corresponding to approximately four magnetic pole teeth T. On the other hand, in the windings shown in Fig. 3A and Fig. 3B, the linking portion L extends over a length corresponding to approximately two magnetic pole teeth T.

In general, shorter linking portions L are preferable from the viewpoints of ease of insulation and noise prevention. In this regard, the windings of the first embodiment described above is preferable to the windings of the second modification example.

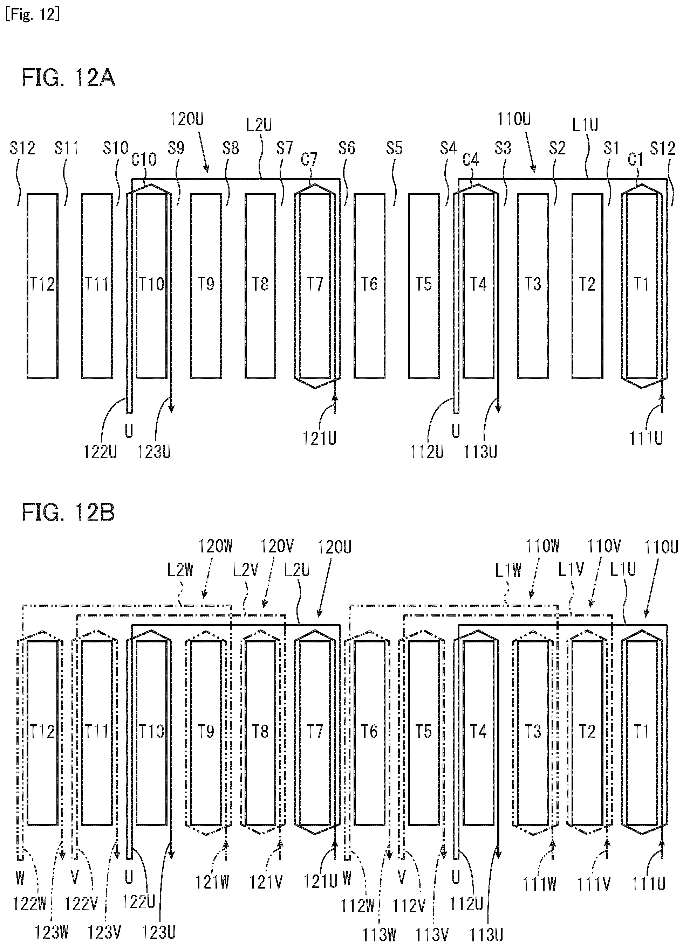

### [Third Modification Example of the First Embodiment: Fig. 12A and Fig. 12B]

Next, a third modification example of the above-described first embodiment will be described with reference to Fig. 12A and Fig. 12B. The third modification example differs from the second modification example of the first embodiment only in that the winding proceeds in the direction opposite to that shown in Fig. 10A and Fig. 10B, as viewed in the circumferential direction of the stator core 10. Then, the notation method of the magnetic pole teeth T follows that of the first modification example, as illustrated in Fig. 8.

Fig. 12A and Fig. 12B respectively illustrate the winding structure of the stator 1 in the third modification example, in a manner similar to Fig. 3A and Fig. 3B.

In the winding structure illustrated in Fig. 12A and Fig. 12B, the slot S into which the winding is drawn, the magnetic pole tooth T around which the winding is wound, the slot S from which the winding is drawn out, and the magnetic pole teeth T between which the linking portion L is formed are the same as those in the second embodiment illustrated in Fig. 11A and Fig. 11B. However, since the order of assigning reference signs to the magnetic pole teeth T and slots S is reversed relative to Fig. 1, Fig. 12A and Fig. 12B illustrate a structure where, using the same reference signs as in Fig. 10A and Fig. 10B, the winding progression direction is reversed in the circumferential direction of the stator core 10, as compared to Fig. 10A and Fig. 10B.

However, the direction in which the conductor is wound around each magnetic pole tooth T is opposite to that in Fig. 10A and Fig. 10B. This corresponds to the reversal of the winding progression direction.

Specifically, in the third modification example, as illustrated in Fig. 12A, the first portion 110U starts from an end wire 111U at the winding start, is drawn into the slot S12 (first slot) from the first end face side, and is continuously wound in a counterclockwise direction (first direction) around the magnetic pole tooth T1 to form the coil C1. The first portion 110U is then continuously drawn out to the second end face side from the slot S12 and led to the position of the slot S4 (second slot) as a linking portion L1U extending on the second end face side, is further continuously drawn out to the first end face side to form a lead-out portion 112U on the first end face side of the slot S4, and is further continuously wound in a clockwise direction (second direction) around the magnetic pole tooth T4 to form the coil C4, and then continuously drawn out to the first end face side from the slot S3 (third slot), thereby forming an end wire 113U at the winding end.

The second portion 120U is located at a position rotated by half the circumference from the first portion 110U and has the same winding shape as the first portion 110U, as in the first modification example of the first embodiment.

Such winding structure also includes (Feature1) and (Feature2) described in the first embodiment and, as with the windings in the first embodiment, allows simultaneous winding of six portions in three phases. Furthermore, connection by star connection as in Fig. 4 is possible. The current flow direction of each coil C1 to C12 is clockwise, the same as that in the first embodiment. The positions from which the lead wires or lead-out portions are drawn correspond to a left-right reversal of Fig. 11. That is, the manner and circumferential range in which the lead wires or lead-out portions are drawn out from the stator core 10 are the same as those in the windings of the second modification example.

Therefore, the stator 1 of this third modification example and the winding method thereof can achieve the same effects as those of the configuration of the first embodiment and each modification example described above.

### [Fourth Modification Example of the First Embodiment: Fig. 13]

Next, a fourth modification example of the above- described first embodiment will be described with reference to Fig. 13. The fourth modification example differs from the first embodiment shown in Fig. 3A and Fig. 3B only in that the windings of the three phases differ from one another in their circumferential positions on the stator core 10 by two magnetic pole teeth T.

The windings of the fourth modification example include the above-described (Feature2) but does not include (Feature1).

Fig. 13 illustrates the winding structure of the stator 1 in the fourth modification example, in a manner similar to Fig. 3B.

In the configuration of Fig. 13, the end wire 111U at the winding start of the first portion 110U of the U-phase is drawn into the slot S1 and initially wound around the magnetic pole tooth T1, whereas the end wire 111V of the first portion 110V of the V-phase is drawn into the slot S3 located two magnetic pole teeth T apart from the slot S1, and initially wound around the magnetic pole tooth T3. Similarly, the end wire 111W of the first portion 110W of the W-phase is drawn into the slot S5 located two magnetic pole teeth T further apart from the slot S3, and initially wound around the magnetic pole tooth T5. The structure of the first portion 110U is the same as that illustrated in Fig. 3A.

As described with reference to Fig. 7, such an arrangement allows ample space to be secured for arranging the nozzles 41 and 42 and the advancing and retracting mechanisms 41a and 42a thereof, which are used to simultaneously wind six portions of the three-phase windings.

However, as can be seen from Fig. 13, the lead-out portions 112 and 122, which serve as lead wires, are drawn out evenly from the entire circumference of the stator core 10, resulting in reduced work efficiency for wiring.

As described above, the configuration shown in Fig. 3B and the configuration shown in Fig. 13 each have respective advantages and disadvantages depending on the perspective. Therefore, which configuration is preferably adopted may vary depending on the design concept or the emphasized factors of the winding apparatus, the stator 1, or the electrical rotating machine including the stator 1.

It should be noted that not only the first embodiment but also the first to third modification examples may be subjected to a modification similar to that of the fourth modification example.

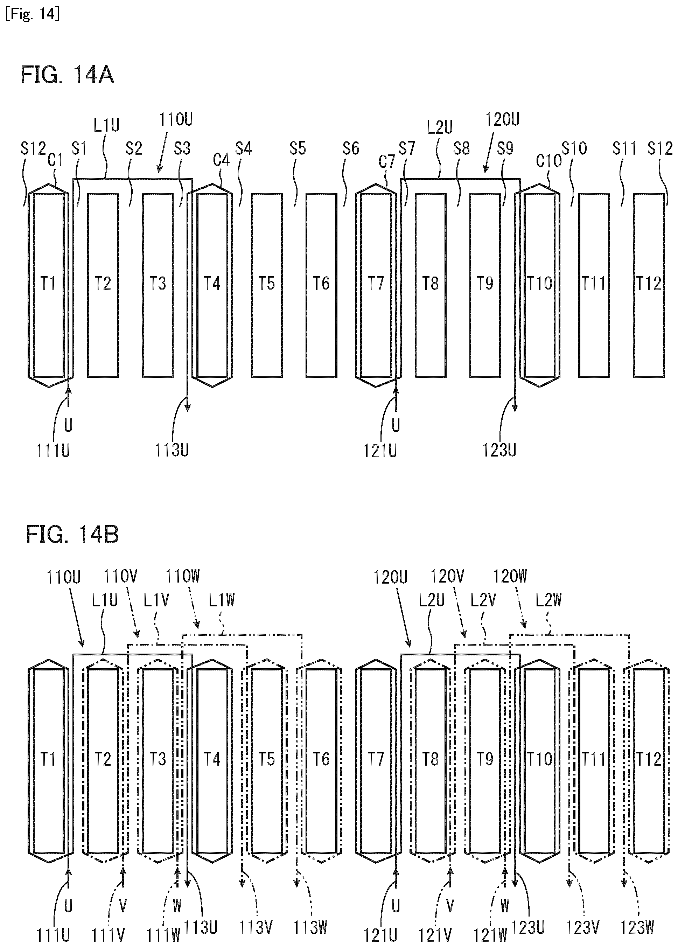

### [Second Embodiment: Fig. 14A to Fig. 16]

Next, a second embodiment of the present invention will be described with reference to Fig. 14A to Fig. 16.

The second embodiment differs from the first embodiment in that the winding structure of the stator 1 assumes a star connection in which, for each phase, two coils C, each wound in series around two magnetic pole teeth T, are connected in parallel. Other aspects, including the configuration of the stator core 10, are the same as those of the first embodiment.

Fig. 14A and Fig. 14B respectively illustrate the winding structure of the stator 1 in the second embodiment, in a manner similar to Fig. 3A and Fig. 3B. The winding structure of the second embodiment also includes (Feature1) and (Feature2) described in the first embodiment, and, as with the windings in the first embodiment, allows simultaneous winding of six portions in three phases

In the windings of the second embodiment, as illustrated in Fig. 14A, the first portion 110U of the U-phase winding starts from an end wire 111U at the winding start, is drawn into the slot S1 (first slot) adjacent to the magnetic pole tooth T1 from the first end face side, and is continuously wound around the magnetic pole tooth T1 in a counterclockwise direction (first direction) to form the coil C1.

The first portion 110U is then continuously drawn out to the second end face side from the slot S1, and led to the position of the slot S3 (second slot) adjacent to the magnetic pole tooth T4, as a linking portion L1U extending on the second end face side.

The first portion 110U is further continuously drawn into the slot S3 from the second end face side, and is continuously wound in the counterclockwise direction (first direction) around the magnetic pole tooth T4 to form the coil C4. The first portion 110U is then continuously drawn out to the first end face side from the slot S3, thereby forming an end wire 113U at the winding end.

As in the case of the first embodiment, the second portion 120U is located at a position rotated by half the circumference, i.e., by six magnetic pole teeth T, clockwise from the first portion 110U as viewed in Fig. 1, and has the same winding shape as the first portion 110U.

Further, as illustrated in Fig. 14B, the windings of the V-phase and W-phase are located at positions obtained by rotating the above-described U-phase winding clockwise as viewed in Fig. 1 (rightward in Fig. 14B) by one and two magnetic pole teeth T, respectively, and have the same winding shape as that of the U-phase winding.

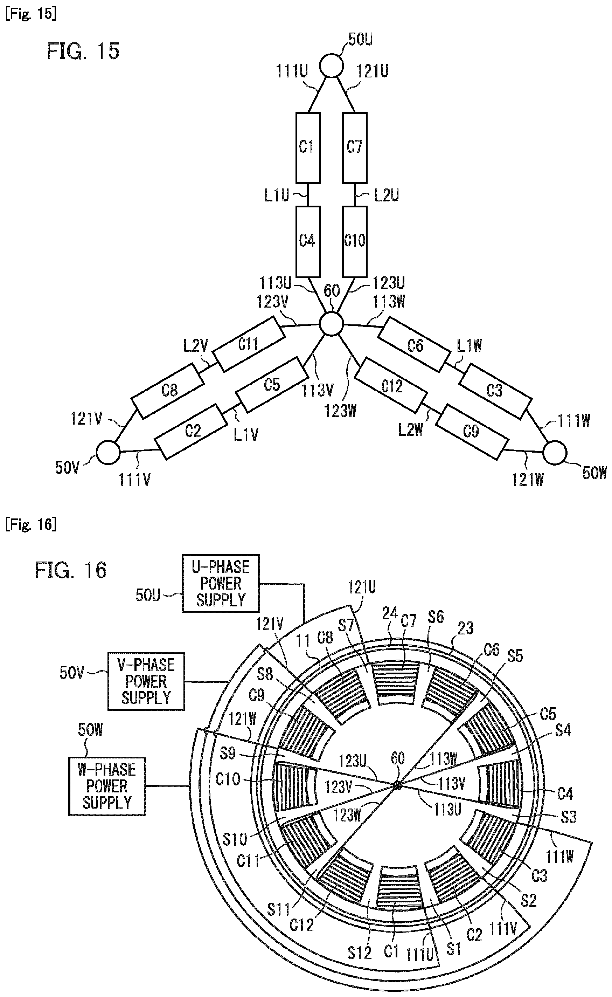

Fig. 15 is a diagram corresponding to Fig. 4, for explaining a star connection structure that can be implemented using the windings shown in Fig. 14B. Fig. 16 is a diagram corresponding to Fig. 5, for explaining a wiring operation to be performed on the windings shown in Fig. 14B to form the star connection shown in Fig. 15.

When manufacturing a motor using the stator 1 shown in Fig. 14B, it is assumed that a star connection will be formed as shown in Fig. 15, in which, for each phase, two circuits, each including two coils C wound around respective magnetic pole teeth T and connected in series, are connected in parallel.

For the U-phase, by connecting the end wires 111U and 121U to the U-phase power supply 50U, and connecting the end wires 113U and 123U to the neutral point 60, the coils C1 and C4 can be connected in series, the coils C7 and C10 can be connected in series, and further these two series circuits can be connected in parallel. The direction of current flow is the same in all the coils C, namely, counterclockwise when viewed from the center of the stator core 10.

That is, the end wires 111U and 121U can be used as lead wires, and the end wires 113U and 123U can be used as neutral lines. The linking portion L1U functions as a connection wire between the coils C1 and C4, and the linking portion L2U functions as a connection wire between the coils C7 and C10.

For the V-phase as well, by a corresponding connection, a first circuit in which the coils C2 and C5 are connected in series and a second circuit in which the coils C8 and C11 are connected in series can be connected in parallel. Similarly, for the W-phase, a first circuit in which the coils C3 and C6 are connected in series and a second circuit in which the coils C9 and C12 are connected in series can be connected in parallel by a corresponding connection.

For connection to the power supply 50, the two winding-start side end wires 111 and 121 for each phase may be collectively connected to the power supply 50 of the corresponding phase. This collective connection point corresponds to a lead section for connection to the power supply 50. The two end wires 111 and 121 may be connected to a common connector to form the lead section. For the neutral point, all six winding-end side end wires 113 and 123 for the three phases may be collectively connected to the common neutral point 60.

As can be seen from Fig. 16, the lead wires are drawn out only from three consecutive slots S (slots S1 to S3 and slots S7 to S9) located respectively on the lower right side and the upper left side in the figure. Therefore, as in the case of the first embodiment, high work efficiency can be achieved in wiring the lead wires. In the second embodiment, the neutral lines are also drawn out only from three consecutive slots S (slots S3 to S5 and slots S9 to S11) located respectively on the right side and the left side in the figure. Accordingly, similarly high work efficiency can be achieved in wiring the neutral lines as well. These effects are achieved by (Feature1) described above.

Further, As can be seen from Fig. 14A and Fig. 14B, each end wire 111 and 121, which serves as a lead wire, is formed first, and then the coil C is wound over it. Accordingly, as in the case of the lead-out portions 112 and 122 in the first embodiment, each end wire 111 and 121 is pressed by the coil C and thereby fixed onto the stator core 10, which facilitates wire handling during the wiring process. Although it is also possible to form the two-parallel connection shown in Fig. 15 by using the end wires 113 and 123 as lead wires and the end wires 111 and 121 as neutral lines, using the end wires 111 and 121 as lead wires allows the lead wire side, which requires more delicate handling, to be fixed, thereby further improving work efficiency.

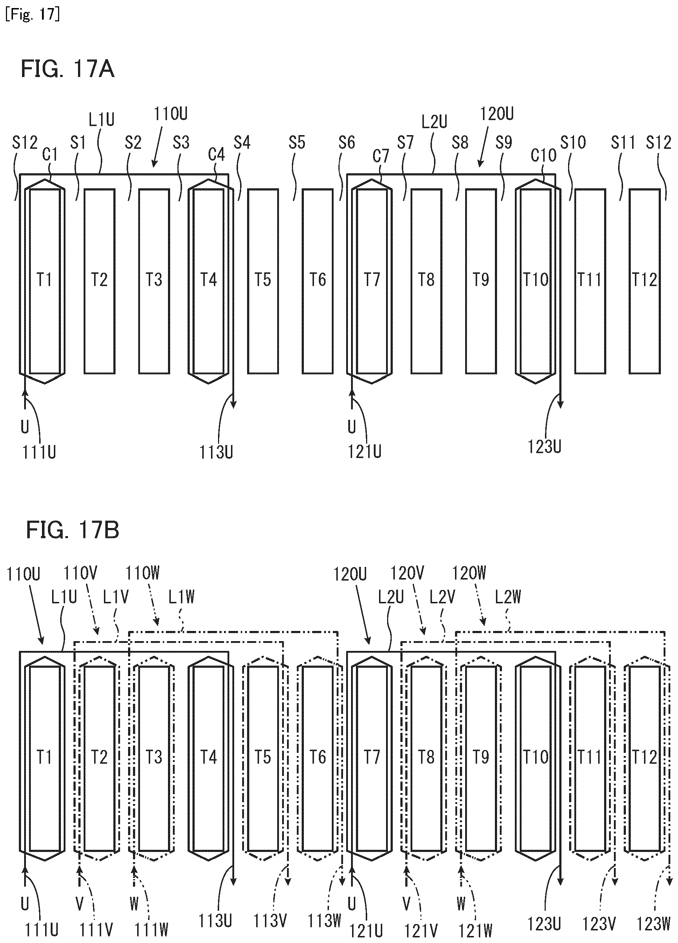

### [Modification Example of the Second Embodiment: Fig. 17A to Fig. 18]

Next, a modification example of the second embodiment will be described with reference to Fig. 17A to Fig. 18. This modification example differs from the second embodiment only in that the direction in which the conductor is wound around each magnetic pole tooth T is reversed, and accordingly, the positions of the slots S through which the conductor passes are changed.

Fig. 17A and Fig. 17B respectively illustrate the winding structure of the stator 1 in this modification example, in a manner similar to Fig. 3A and Fig. 3B.

In this modification example, as shown in Fig. 17A, the first portion 110U of the U-phase winding starts from an end wire 111U at the winding start, is drawn into the slot S12 (first slot) adjacent to the magnetic pole tooth T1 from the first end face side, and is continuously wound in a clockwise direction (first direction) around the magnetic pole tooth T1 to form the coil C1.

The first portion 110U is then continuously drawn out to the second end face side from the slot S12, and led to the position of the slot S4 (second slot) adjacent to the magnetic pole tooth T4, as a linking portion L1U extending on the second end face side.

The first portion 110U is further continuously drawn into the slot S4 from the second end face side, is continuously wound in a clockwise direction around the magnetic pole tooth T4 to form the coil C4, and is continuously drawn out to the first end face side from the slot S4, thereby forming an end wire 113U at the winding end.

The second portion 120U is located at a position rotated by half the circumference from the first portion 110U with the same shape as the first portion 110U, as in the second embodiment.

Such winding structure also includes (Feature1) and (Feature2) described above, and, as in the cases of the windings in the first and second embodiments, allows simultaneous winding of six portions in three phases. In addition, connection by a star connection as shown in Fig. 15 is possible. However, the current flow direction of each coil C1 to C12 is opposite to that in the second embodiment and is clockwise as viewed from the center of the stator core 10.

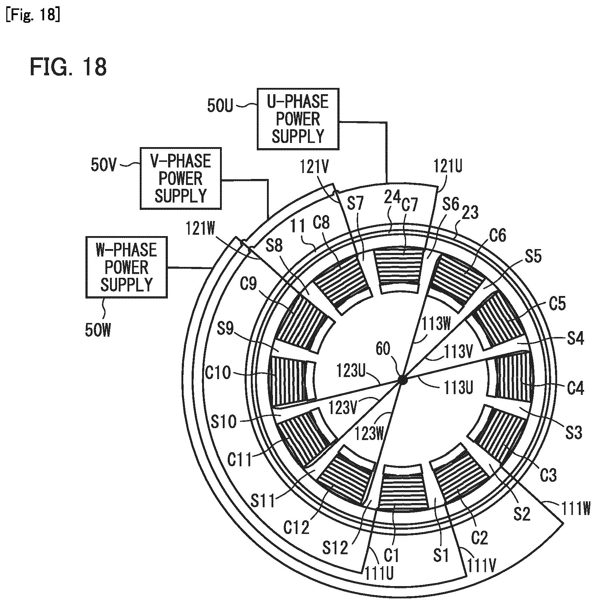

Fig. 18 illustrates the positions from which the lead wires and neutral lines are drawn and the assumed connection topology in the windings of this modification example, in a manner similar to Fig. 5.

As can be seen from Fig. 18, similarly to the case of Fig. 16, both the lead wires and the neutral lines are drawn out only from two locations, each including three consecutive slots S (lead wires: slots S12 to S2 and slots S6 to S8; neutral lines: slots S4 to S6 and slots S10 to S12).

Accordingly, the stator 1 of this modification example and the winding method thereof can also achieve the same effects as those of the configuration of the second embodiment described above.

As can be seen from Fig. 17A and Fig. 17B, in the windings of this modification example, each linking portion L extends over a length corresponding to approximately four magnetic pole teeth T. In contrast, in the windings shown in Fig. 14A and Fig. 14B, the linking portion L extends over a length corresponding to approximately two magnetic pole teeth T.

In general, shorter linking portions L are preferable from the viewpoints of ease of insulation and noise prevention. In this regard, the windings of the second embodiment described above is preferable to the windings of this modification example.

As other modifications, it is also conceivable to apply a variation to the winding structures of the second embodiment and the present modification example, in which the winding progression direction is reversed in the circumferential direction of the stator core 10, as described in the first and third modification examples of the first embodiment. Even with such modified configurations, the same effects as those of the original configuration before modification can be achieved, as described with respect to the first and third modification examples of the first embodiment.

A modification may also be applied such that the windings of the three phases differ from one another in their circumferential positions on the stator core 10 by two magnetic pole teeth, as described in the fourth modification example of the first embodiment. However, if this modification is applied to the second embodiment, a reduction in work efficiency during wiring process occurs not only for the lead wires but also for the neutral lines. Therefore, the effect of setting the positional difference to one magnetic pole tooth T for each phase is more significant in the second embodiment than in the first embodiment.

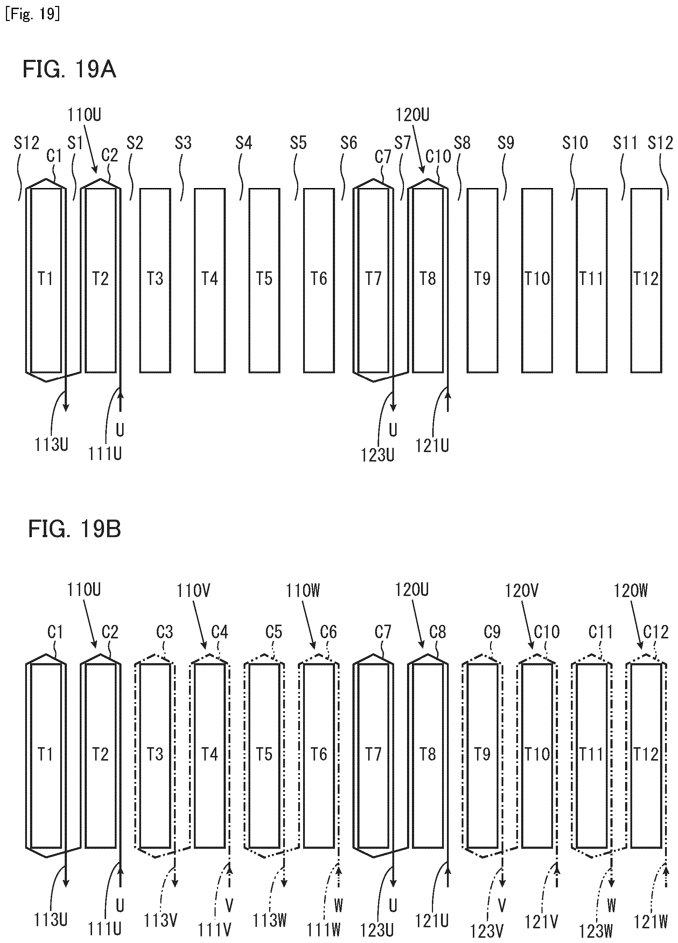

### [Third Embodiment: Fig. 19A to Fig. 21]

Next, a third embodiment of the present invention will be described with reference to Fig. 19A to Fig. 21.

The third embodiment differs from the first embodiment in that the winding structure of the stator 1 assumes a star connection in which, for each phase, two coils C, each wound in series around two adjacent magnetic pole teeth T and having different winding directions on the respective magnetic pole teeth T, are connected in parallel. Other aspects, including the configuration of the stator core 10, are the same as those of the first embodiment.

Fig. 19A and Fig. 19B respectively illustrate the winding structure of the stator 1 in the third embodiment, in a manner similar to Fig. 3A and Fig. 3B. The winding structure of the third embodiment also includes (Feature2) described in the first embodiment and further includes the following (Feature1'), which is similar to the above-described (Feature1), and, as with the windings in the first embodiment, allows simultaneous winding of six portions in three phases. However, since the circumferential positions of the windings of the respective phases differ from one another by two magnetic pole teeth T, the nozzle arrangement shown in Fig. 7 is used for the nozzles 41 and 42.

(Feature1'): The windings of the respective three phases share a first common winding pattern of the conductor around the magnetic pole teeth T but differ from one another in their circumferential positions on the stator core 10 by two magnetic pole teeth T.

In the windings of the third embodiment, as shown in Fig. 19A, the first portion 110U of the U-phase winding starts from an end wire 111U at the winding start, is drawn into the slot S2 (first slot) adjacent to the magnetic pole tooth T2 from the first end face side, and is continuously wound in a counterclockwise direction (first direction) around the magnetic pole tooth T2 to form the coil C2.

The first portion 110U is further continuously wound in a clockwise direction (second direction) around the adjacent magnetic pole tooth T1 to form the coil C1, and is drawn out to the first end face side from the slot S1 (second slot) after completing the winding around the magnetic pole tooth T1 at the slot S1 adjacent to the magnetic pole tooth T1, thereby forming an end wire 113U at the winding end.

There does not need to be a distinct boundary between the coils C2 and C1, as long as the transition between them occurs appropriately within the slot S1. Accordingly, no linking portion is formed at this location. As a whole, the winding of the third embodiment does not need to include any linking portions.

As in the case of the first and second embodiments, the second portion 120U is located at a position rotated by half the circumference, i.e., by six magnetic pole teeth T, clockwise from the first portion 110U as viewed in Fig. 1, and has the same winding shape as the first portion 110U.

Further, as illustrated in Fig. 19B, the windings of the V-phase and W-phase are located at positions obtained by rotating the above-described U-phase winding clockwise as viewed in Fig. 1 (rightward in Fig. 19B) by two and four magnetic pole teeth T, respectively, and have the same winding shape as that of the U-phase winding.

In the windings of the third embodiment, since each of the first portion 110 and the second portion 120 is wound around two adjacent magnetic pole teeth T, it is necessary for the windings of the respective phases to be shifted in the circumferential direction by two magnetic pole teeth T, rather than by one magnetic pole tooth T.

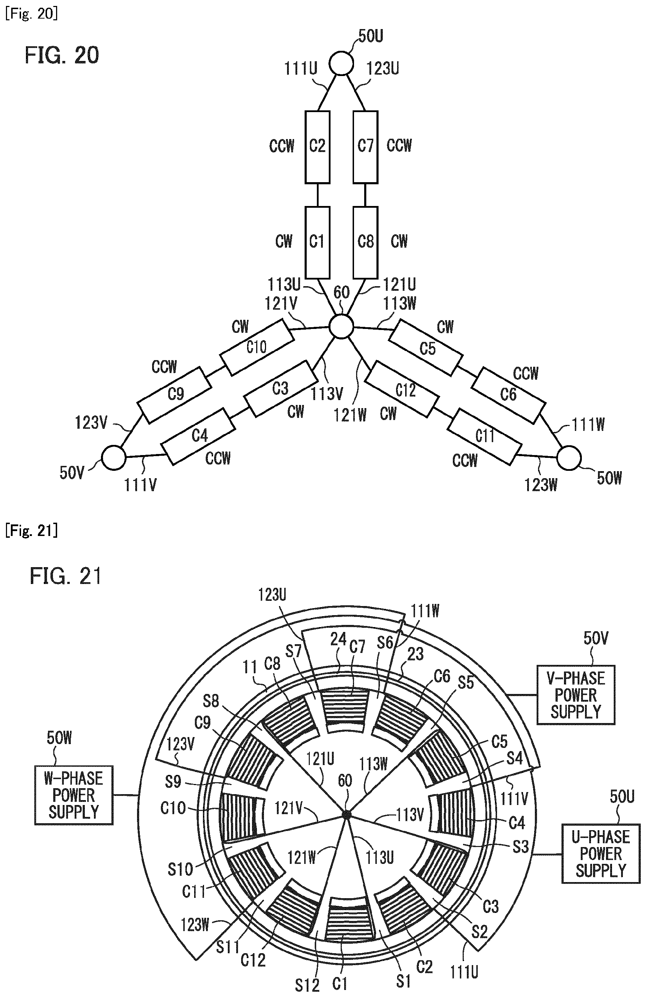

Fig. 20 is a diagram corresponding to Fig. 4, for explaining a star connection structure that can be implemented using the windings shown in Fig. 19B. Fig. 21 is a diagram corresponding to Fig. 5, for explaining a wiring operation to be performed on the windings shown in Fig. 19B to form the star connection shown in Fig. 20.

When manufacturing a motor using the stator 1 shown in Fig. 19B, it is assumed that a star connection will be formed as shown in Fig. 20, in which, for each phase, two circuits, each including two coils C wound around respective magnetic pole teeth T and connected in series, are connected in parallel. In addition, since the two coils C to be connected in series are wound around adjacent magnetic pole teeth T, their current flow directions are set opposite to each other in order to suppress the effects of self-inductance.

Furthermore, a 12-pole stator such as the stator 1 is primarily intended to be used in combination with a 10-pole rotor. In such a case, two opposing permanent magnets among the ten embedded in the rotor have opposite magnetic polarities. Accordingly, the current flow directions of coils C, such as C1 and C7, which are located 180° apart in the circumferential direction, are also set to be opposite to each other.

In Fig. 20, "CW" and "CCW" are symbols indicating whether the direction of current flowing from the power supply 50 to the neutral point 60 is clockwise (CW) or counterclockwise (CCW), as viewed from the center of the stator core 10.

As shown in Fig. 20, for the U-phase, by connecting the end wires 111U and 123U to the U-phase power supply 50U, and connecting the end wires 113U and 121U to the neutral point 60, the coils C2 and C1 can be connected in series, the coils C7 and C8 can be connected in series, and further these two series circuits can then be connected in parallel. That is, the end wires 111U and 123U can be used as lead wires, and the end wires 113U and 121U can be used as neutral lines.

In the first portion 110, the winding-start side end wire 111U is used as the lead wire, while in the second portion 120, the winding-end side end wire 123U is used as the lead wire. This is to reverse the current flow direction at each magnetic pole tooth T while using the same winding pattern.

For the V-phase as well, by a corresponding connection, a first circuit in which the coils C4 and C3 are connected in series and a second circuit in which the coils C9 and C10 are connected in series can be connected in parallel. Similarly, for the W-phase, a first circuit in which the coils C6 and C5 are connected in series and a second circuit in which the coils C11 and C12 are connected in series can be connected in parallel by a corresponding connection.

For connection to the power supply 50, the two end wires 111 and 123 to be used as lead wires for each phase may be collectively connected to the power supply 50 of the corresponding phase. This collective connection point corresponds to a lead section for connection to the power supply 50. The two end wires 111 and 123 may be connected to a common connector to form the lead section. For the neutral point, all six end wires 113 and 121, which serve as neutral lines, for the three phases may be collectively connected to the common neutral point 60.

As can be seen from Fig. 21, in the windings of the third embodiment, both the lead wires and the neutral lines are drawn out from substantially the entire circumference of the stator core 10, although there are slightly denser and sparser regions. This is an inevitable consequence of the structural constraint that arises from using coils C wound in series around two adjacent magnetic pole teeth T. This embodiment proposes a configuration that enables six portions for the three phases to be wound simultaneously even under such a constraint, thereby achieving the effect of speeding up the winding process.

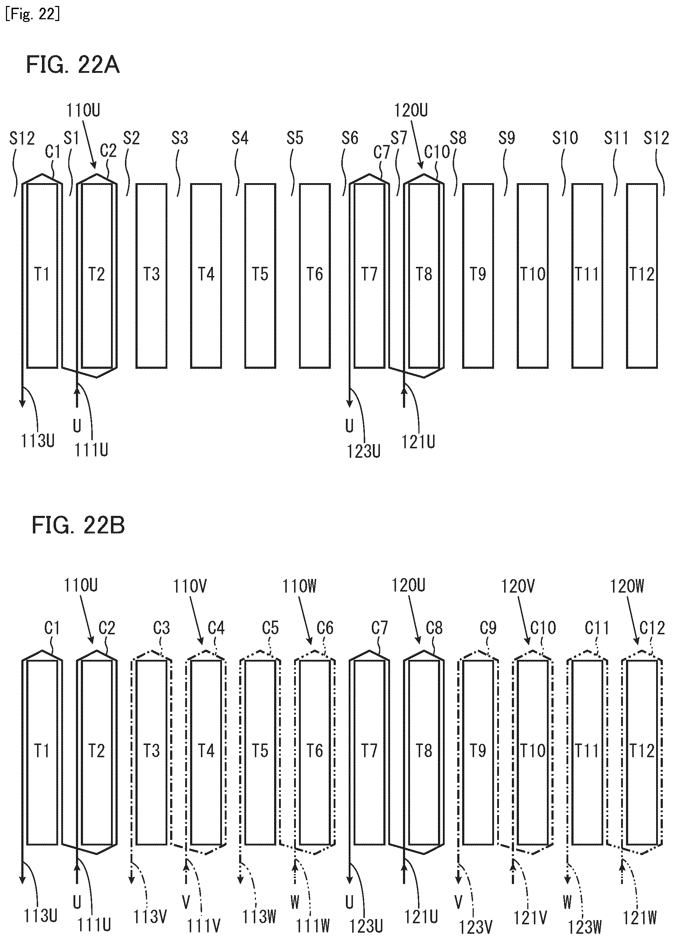

### [Modification Example of the Third Embodiment: Fig. 22A to Fig. 23]

Next, a modification example of the third embodiment will be described with reference to Fig. 22A to Fig. 23. This modification example differs from the third embodiment only in that the direction in which the conductor is wound around each magnetic pole tooth T is reversed, and accordingly, the positions of the slots S through which the conductor passes are changed.

Fig. 22A and Fig. 22B respectively illustrate the winding structure of the stator 1 in this modification example, in a manner similar to Fig. 3A and Fig. 3B.

In this modification example, as shown in Fig. 22A, the first portion 110U of the U-phase winding starts from an end wire 111U at the winding start, is drawn into the slot S1 (first slot) adjacent to the magnetic pole tooth T2 from the first end face side, and is continuously wound in a clockwise direction (first direction) around the magnetic pole tooth T2 to form the coil C2.

The first portion 110U is further continuously wound in a counterclockwise direction (second direction) around the adjacent magnetic pole tooth T1 to form the coil C1, and is drawn out to the first end face side from the slot S12 (second slot) after completing the winding around the magnetic pole tooth T1 at the slot S12 adjacent to the magnetic pole tooth T1, thereby forming an end wire 113U at the winding end.

There does not need to be a distinct boundary between the coils C2 and C1, and no linking portion is formed at this location, as in the third embodiment.

Further, the second portion 120U is located at a position rotated by half the circumference from the first portion 110U, and has the same winding shape as the first portion 110U, as in the third embodiment.

Such winding structure also includes (Feature1') and (Feature2) described above, and as with the windings in the first to third embodiments, allows simultaneous winding of six portions in three phases. In addition, connection by a star connection as shown in Fig. 20 is possible. However, the current flow direction of each coil C1 to C12 is opposite to that shown in Fig. 20.

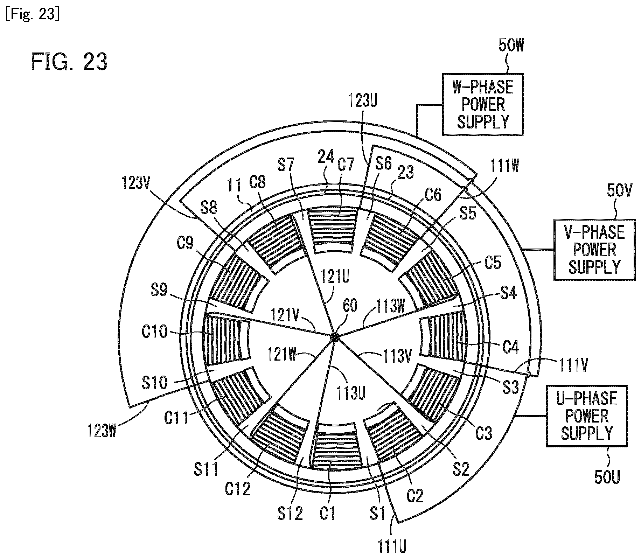

Fig. 23 illustrates the positions from which the lead wires and neutral lines are drawn and the assumed connection topology in the windings of this modification example, in a manner similar to Fig. 5.

As can be seen from Fig. 23, in this modification example as well, both the lead wires and the neutral lines are drawn out from substantially the entire circumference of the stator core 10, similarly to the case of Fig. 21. That is, this modification example also enables six portions for the three phases to be wound simultaneously, even under the structural constraint of using coils C wound in series around two adjacent magnetic pole teeth T, thereby achieving the effect of speeding up the winding process, as in the third embodiment.

As other modifications, it is also conceivable to apply a variation to the winding structures of the third embodiment and the present modification example, in which the winding progression direction is reversed in the circumferential direction of the stator core 10, as described in the first and third modification examples of the first embodiment. Even with such modified configurations, the same effects as those of the original configuration before modification can be achieved, as described with respect to the first and third modification examples of the first embodiment.

As a variation corresponding to the fourth modification example of the first embodiment, it is also possible to modify the winding such that the windings of the three phases differ from one another in their circumferential positions on the stator core 10 by four magnetic pole teeth T. In the third embodiment, since the lead wires and neutral lines are drawn out from substantially the entire circumference of the stator core 10 as described above, even if the circumferential positional difference is four magnetic pole teeth T instead of two, the work efficiency in wiring does not significantly change.

In addition, even when the circumferential positional difference is four magnetic pole teeth T, six portions can be wound simultaneously by using the nozzles 41 and 42 arranged as shown in Fig. 7. In this regard, in the case of the third embodiment, there is no significant difference in the space required for arranging the nozzles 41 and 42 and their advancing and retracting mechanisms 41a and 42a, regardless of whether the circumferential positional difference is two or four magnetic pole teeth T.

While the preferred embodiments and several modifications of the present invention have been described above, the present invention is not limited to the specific embodiments and modifications described herein, and various other changes and modifications may be made without departing from the scope of the invention.

For example, in the embodiments described above, the windings of the three phases, that is, U-phase, V-phase, and W-phase, are arranged in this order at circumferential positions offset from one another by one or two magnetic pole teeth T in the winding progression direction (e.g., to the right in the case of Fig. 3A and Fig. 3B). However, the order of arrangement of the three phases may be changed.

The specific shape and size of the stator core 10 are also not limited to those described in the embodiments. In particular, the insulating member 13 may be provided with structures for positioning the linking portions L, lead wires, and neutral lines.

Furthermore, the configurations described in the embodiments of the present invention may be implemented in part, and the various configurations described above may be combined in any manner as long as there is no contradiction among them. The effects described in the embodiments of the present invention are merely illustrative of the preferable effects derived from the invention, and the effects of the present invention are not limited to those explicitly described in the embodiments.

### [Reference Signs List]

1: stator; 10: stator core; 11: annular portion; 13, 23: insulating member; 14, 24: outer wall; 15: linking portion arrangement section; 16: pin; 17, 27: magnetic pole tooth covering portion; 31: rotation shaft; 32: rotor; 40: nozzle holding unit; 41, 42: nozzle; 41a, 42a: advancing and retracting mechanism; 43: conductor; 44: conductor holding unit; 50: power supply; 60: neutral point; 110: first portion; 111, 113: end wire of first portion; 112: lead-out portion of first portion; 120: second portion; 121, 123: end wire of second portion; 122: lead-out portion of second portion; C (C1 to C12): coil; L, L1, L2: linking portion; S (S1 to S12): slot; T (T1 to T12): magnetic pole tooth
(Note: For indicating the configuration of each phase (U-phase, V-phase, and W-phase), the corresponding suffix "U," "V," or "W" is appended to each reference sign, as appropriate.)

## Claims

1. A stator winding method of winding three-phase windings, with a conductor (43), around twelve magnetic pole teeth (T) arranged at equal angular intervals on an inner peripheral portion of a stator core (10) configured to constitute a three-phase, twelve-pole stator (1),
wherein the windings of the respective phases share a first common winding pattern of the conductor (43) around the magnetic pole teeth (T) but differ from one another in their circumferential positions on the stator core (10),
the winding of each phase comprises a first portion (110) and a second portion (120), which share a second common winding pattern of the conductor (43) around the magnetic pole teeth (T) but differ from each other in their circumferential positions on the stator core (10) by half a circumference, and
all of the first portions (110) and the second portions (120) of the windings of the three phases are wound simultaneously by synchronously moving, relative to the stator core (10), six nozzles (41 and 42) that feed the conductor (43).

2. The stator winding method according to claim 1,
wherein slots (S) are formed between adjacent magnetic pole teeth (T),
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
the first portion (110) of one of the three phases is formed by, through movement of at least one of: a first nozzle (41) corresponding to the first portion (110); and the stator core (10), while feeding the conductor (43) from the first nozzle (41):
inserting the first nozzle (41) into a first slot (S1 or S12) adjacent to the first tooth (T1) from the first end face side;
then winding the conductor (43) around the first tooth (T1) in a first direction;
then drawing the first nozzle (41) out from the first slot (S1 or S12) to the second end face side, and relatively rotating the first nozzle (41) with respect to the stator core (10) to a position of a second slot (S3 or S4) adjacent to the fourth tooth (T4), thereby forming a linking portion (L1) on the second end face side;
then inserting the first nozzle (41) into the second slot (S3 or S4) from the second end face side, drawing the first nozzle (41) out to the first end face side and pulling out the conductor (43) by a predetermined length without passing through any step of winding the conductor (43) around a magnetic pole tooth (T), and then re-inserting the first nozzle (41) into the second slot (S3 or S4) from the first end face side, thereby forming a lead-out portion (112) of the conductor (43) on the first end face side;
then winding the conductor (43) around the fourth tooth (T4) in a second direction opposite to the first direction; and
then drawing the first nozzle (41) out to the first end face side of a third slot (S4 or S3), which is adjacent to the fourth tooth (T4) and located on a side opposite to the second slot (S3 or S4) with respect to the fourth tooth (T4),
preferably
wherein the first slot (S1) is located between the first tooth (T1) and the second tooth (T2), and the second slot (S3) is located between the fourth tooth (T4) and the third tooth (T3),
or
wherein the first slot (S12) is located between the first tooth (T1) and the twelfth tooth (T12), and the second slot (S4) is located between the fourth tooth (T4) and the fifth tooth (T5),
further preferably
wherein the windings of the three phases differ from one another in their circumferential positions by one magnetic pole tooth (T).

3. A stator manufacturing method comprising forming a star connection in which, for each phase, four coils (C) each wound around one magnetic pole tooth (T) are connected in parallel, through:
winding the three-phase windings around the stator core (10) by the stator winding method according to claim 2;
then connecting all end wires (111, 113, 121 and 123) of the first portion (110) and the second portion (120) of each phase to a common neutral point (60); and
connecting, for each phase, the lead-out portions (112 and 122) of the first portion (110) and the second portion (120) to a power supply (50) of the corresponding phase.

4. The stator winding method according to claim 1,
wherein slots (S) are formed between adjacent magnetic pole teeth (T),
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
the first portion (110) of one of the three phases is formed by, through movement of at least one of: a first nozzle (41) corresponding to the first portion (110); and the stator core (10), while feeding the conductor (43) from the first nozzle (41):
inserting the first nozzle (41) into a first slot (S1 or S12) adjacent to the first tooth (T1) from the first end face side;
then winding the conductor (43) around the first tooth (T1) in a first direction;
then drawing the first nozzle (41) out from the first slot (S1 or S12) to the second end face side, and relatively rotating the first nozzle (41) with respect to the stator core (10) to a position of a second slot (S3 or S4) adjacent to the fourth tooth (T4), thereby forming a linking portion (L1) on the second end face side;
then inserting the first nozzle (41) into the second slot (S3 or S4) from the second end face side;
then winding the conductor (43) around the fourth tooth (T4) in the first direction; and
then drawing the first nozzle (41) out to the first end face side of the second slot (S3 or S4),
wherein the windings of the three phases differ from one another in their circumferential positions by one magnetic pole tooth (T), preferably
wherein the first slot (S1) is located between the first tooth (T1) and the second tooth (T2), and the second slot (S3) is located between the fourth tooth (T4) and the third tooth (T3),
or
wherein the first slot (S12) is located between the first tooth (T1) and the twelfth tooth (T12), and the second slot (S4) is located between the fourth tooth (T4) and the fifth tooth (T5).

5. A stator manufacturing method comprising forming a star connection in which, for each phase, two coils (C), each wound in series around two magnetic pole teeth (T), are connected in parallel, through:
winding the three-phase windings around the stator core (10) by the stator winding method according to claim 4;
then connecting all winding-end side end wires (113 and 123) of the first portion (110) and the second portion (120) of each phase to a common neutral point (60); and
connecting, for each phase, winding-start side end wires (111 and 121) of the first portion (110) and the second portion (120) to a power supply (50) of the corresponding phase.

6. The stator winding method according to claim 1,
wherein slots (S) are formed between adjacent magnetic pole teeth (T),
wherein when one of two axial end faces of the stator core (10) is defined as a first end face; and
the twelve magnetic pole teeth (T) are defined as, in order toward a first circumferential direction that is one of circumferential directions of the stator core (10), a first tooth (T1) through a twelfth tooth (T12), respectively,
the first portion (110) of one of the three phases is formed by, through movement of at least one of: a first nozzle (41) corresponding to the first portion (110); and the stator core (10), while feeding the conductor (43) from the first nozzle (41):
inserting the first nozzle (41) into a first slot (S2 or S1) adjacent to the second tooth (T2) from the first end face side;
then winding the conductor (43) around the second tooth (T2) in a first direction;
directly thereafter, winding the conductor around the first tooth (T1) in a second direction opposite to the first direction; and
then completing the winding around the first tooth (T1) at a second slot (S1 or S12) adjacent to the first slot (S2 or S1), and drawing the first nozzle (41) out to the first end face side of the second slot (S1 or S12), preferably
wherein the first slot (S2) is located between the second tooth (T2) and the third tooth (T3), and the second slot (S1) is located between the first tooth (T1) and the second tooth (T2),
or
wherein the first slot (S1) is located between the second tooth (T2) and the first tooth (T1), and the second slot (S12) is located between the first tooth (T1) and the twelfth tooth (T12).

7. A stator manufacturing method comprising forming a star connection in which, for each phase, two coils (C), each wound in series around two adjacent magnetic pole teeth (T) and having different winding directions on the respective magnetic pole teeth (T), are connected in parallel, through:
winding the three-phase windings around the stator core (10) by the stator winding method according to claim 6;
then connecting all of winding-end side end wires (113) of the first portion (110) of each phase and winding-start side end wires (121) of the second portion (120) of each phase to a common neutral point (60); and
connecting, for each phase, winding-start side end wire (111) of the first portion (110) and winding-end side end wire (123) of the second portion (120) to a power supply (50) of the corresponding phase.

8. A stator (1) comprising:
a stator core (10) comprising twelve magnetic pole teeth (T) arranged at equal angular intervals on an inner peripheral portion thereof, and slots (S) formed between adjacent magnetic pole teeth (T); and
three-phase windings formed of a conductor (43) and wound around the twelve magnetic pole teeth (T) of the stator core (10),
wherein the windings of the respective phases share a first common winding pattern of the conductor (43) around the magnetic pole teeth (T) but differ from one another in their circumferential positions on the stator core (10),
the winding of each phase comprises a first portion (110) and a second portion (120), which share a second common winding pattern of the conductor (43) around the magnetic pole teeth (T) but differ from each other in their circumferential positions on the stator core (10) by half a circumference.

9. The stator (1) according to claim 8,
wherein when two axial end faces of the stator core (10) are defined as a first end face and a second end face, respectively; and
the twelve magnetic pole teeth (T) are defined as, in order toward a first circumferential direction that is one of circumferential directions of the stator core, a first tooth (T1) through a twelfth tooth (T12), respectively,
in the first portion (110) of one of the three phases, the conductor (43) is:
drawn into a first slot (S1 or S12) adjacent to the first tooth (T1) from the first end face side;
continuously wound around the first tooth (T1) in a first direction;
continuously drawn out from the first slot (S1 or S12) to the second end face side and routed as a linking portion (L1) along the second end face side to a position of a second slot (S3 or S4) adjacent to the fourth tooth (T4);
continuously drawn into the second slot (S3 or S4) from the second end face side, drawn out to the first end face side without being wound around any magnetic pole tooth (T), pulled out by a predetermined length, and drawn again into the second slot (S3 or S4) from the first end face side to form a lead-out portion (112) on the first end face side;
continuously wound around the fourth tooth (T4) in a second direction opposite to the first direction; and
continuously drawn out to the first end face side from a third slot (S4 or S3), which is adjacent to the fourth tooth (T4) and located on a side opposite to the second slot (S3 or S4) with respect to the fourth tooth (T4), preferably
wherein the first slot (S1) is located between the first tooth (T1) and the second tooth (T2), and the second slot (S3) is located between the fourth tooth (T4) and the third tooth (T3),
or
wherein the first slot (S12) is located between the first tooth (T1) and the twelfth tooth (T12), and the second slot (S4) is located between the fourth tooth (T4) and the fifth tooth (T5),
further preferably
wherein the windings of the three phases differ from one another in their circumferential positions by one magnetic pole tooth (T).

10. The stator (1) according to claim 9,
wherein all end wires (111, 113, 121 and 123) of the first portion (110) and the second portion (120) of each phase are connected to a common neutral point (60), and
for each phase, the lead-out portions (112 and 122) of the first portion (110) and the second portion (120) are gathered to form a lead section configured to be connected to a power supply (50) of the corresponding phase.

11. The stator (1) according to claim 8,
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
in the first portion (110) of one of the three phases, the conductor (43) is:
drawn into a first slot (S1 or S12) adjacent to the first tooth (T1) from the first end face side;
continuously wound around the first tooth (T1) in a first direction;
continuously drawn out from the first slot (S1 or S12) to the second end face side and routed as a linking portion (L1) along the second end face side to a position of a second slot (S3 or S4) adjacent to the fourth tooth (T4);
continuously drawn into the second slot (S3 or S4) from the second end face side;
continuously wound around the fourth tooth (T4) in the first direction; and
continuously drawn out from the second slot (S3 or S4) to the first end face side, and
wherein the windings of the three phases differ from one another in their circumferential positions by one magnetic pole tooth (T), preferably
wherein the first slot (S1) is located between the first tooth (T1) and the second tooth (T2), and the second slot (S3) is located between the fourth tooth (T4) and the third tooth (T3), or
wherein the first slot (S12) is located between the first tooth (T1) and the twelfth tooth (T12), and the second slot (S4) is located between the fourth tooth (T4) and the fifth tooth (T5).

12. The stator (1) according to claim11,
wherein all winding-end side end wires (113 and 123) of the first portion (110) and the second portion (120) of each phase are connected to a common neutral point (60), and
for each phase, winding-start side end wires (111 and 121) of the first portion (110) and the second portion (120) are gathered to form a lead section configured to be connected to a power supply (50) of the corresponding phase.

13. The stator (1) according to claim 8,
wherein when two axial end faces of the stator core (10) are defined as a first end face and a second end face, respectively; and
the twelve magnetic pole teeth (T) are defined as, in order toward a first circumferential direction that is one of circumferential directions of the stator core (10), a first tooth (T1) through a twelfth tooth (T12), respectively,
in the first portion (110) of one of the three phases, the conductor (43) is:
drawn into a first slot (S2 or S1) adjacent to the second tooth (T2) from the first end face side;
continuously wound around the second tooth (T2) in a first direction;
continuously wound around the first tooth (T1) in a second direction opposite to the first direction; and
drawn out to the first end face side from a second slot (S1 or S12) adjacent to the first slot (S2 or S1), after completing the winding around the first tooth (T1) at the second slot (S1 or S12), preferably
wherein the first slot (S2) is located between the second tooth (T2) and the third tooth (T3), and the second slot (S1) is located between the first tooth (T1) and the second tooth (T2),
or
wherein the first slot (S1) is located between the second tooth (T2) and the first tooth (T1), and the second slot (S12) is located between the first tooth (T1) and the twelfth tooth (T12).

14. The stator (1) according to claim 13,
wherein all of winding-end side end wires (113) of the first portion (110) of each phase and winding-start side end wires (121) of the second portion (120) of each phase are connected to a common neutral point (60), and
for each phase, winding-start side end wire (111) of the first portion (110) and winding-end side end wires (123) of the second portion (120) are gathered to form a lead section configured to be connected to a power supply (50) of the corresponding phase.

15. An electrical rotating machine comprising the stator (1) according to any one of claims 8 to 14.
